# EUROPÄISCHE PATENTSCHRIFT

(11) **EP 1 287 393 B1**
(45) Veröffentlichungstag und Bekanntmachung des Hinweises auf die Patenterteilung: **10.10.2007**
(21) Anmeldenummer: 01927549.4
(22) Anmeldetag: 11.05.2001
(51) Int. Cl.: G02B 6/38

(54) **VERFAHREN ZUM KONFEKTIONIEREN EINES OPTISCHEN STECKVERBINDERS, VORRICHTUNG ZUR DURCHFÜHRUNG DES VERFAHRENS SOWIE STECKVERBINDER FÜR DEN EINSATZ BEI EINEM SOLCHEN VERFAHREN**
METHOD FOR FABRICATING AN OPTICAL PLUG CONNECTOR, DEVICE FOR CARRYING OUT THE METHOD, AND PLUG CONNECTOR FOR USE IN SUCH A METHOD
PROCEDE DE FABRICATION D'UN CONNECTEUR OPTIQUE ENFICHABLE, DISPOSITIF PERMETTANT LA MISE EN OEUVRE DUDIT PROCEDE ET CONNECTEUR ENFICHABLE DESTINE A ETRE UTILISE DANS CE PROCEDE

(30) Priorität: 05.06.2000 CH 11062000
(43) Veröffentlichungstag der Anmeldung: 05.03.2003
(73) Patentinhaber: HUBER & SUHNER AG, 9100 Herisau (CH)
(72) Erfinder: GREUB, Daniel, CH-9000 St. Gallen (CH); KOCH, Beat, CH-9104 Waldstatt (CH); MARJETIC, Igor, CH-9212 Arnegg (CH); TANNER, Paul, CH-9103 Schwellbrunn (CH); BURKHARD, Martin, CH-9100 Herisau (CH)
(74) Vertreter: Ottow, Jens M.
(86) Internationale Anmeldenummer: PCT/CH2001/000290
(87) Internationale Veröffentlichungsnummer: WO 2001/095001

(56) Entgegenhaltungen:
- EP-A- 0 434 212
- EP-A- 0 486 189
- WO-A-99/04299
- GB-A- 2 027 924
- US-A- 4 598 974
- US-A- 4 679 895
- US-A- 4 877 303
- US-A- 5 102 211
- US-A- 5 757 997

## Beschreibung

### TECHNISCHES GEBIET

Die vorliegende Erfindung bezieht sich auf das Gebiet der Lichtwellenleitertechnik. Sie betrifft ein Verfahren zum Konfektionieren eines optischen Steckverbinders gemäss dem Oberbegriff des Anspruchs 1.

Ein solches Verfahren ist z.B. aus der Druckschrift WO-A1-99/04299 der Anmelderin und der GB-A-2 027 924 bekannt.

Die Erfindung betrifft weiterhin eine Vorrichtung zur Durchführung eines solchen Verfahrens sowie einen Steckverbinder für den Einsatz bei einem solchen Verfahren.

### STAND DER TECHNIK

Lichtwellenleiter (LWL) werden wegen ihrer grossen Uebertragungskapazität bzw. Bandbreite und ihrer Unempfindlichkeit gegen elektromagnetische Störungen in den unterschiedlichsten Anwendungsbereichen zunehmend eingesetzt. Bei örtlich stark verzweigten Netzen, wie sie z.B. bei Gebäudeinstallationen vorliegen, kommt dabei den Steckverbindungen zwischen verschiedenen Teilen des Netzes immer grössere Bedeutung zu, wobei die Konfektionierung der Verbinder, d.h., der Anschluss der Verbinder an das jeweilige Kabel, eine besondere Rolle spielt.

Durch die Veränderung der Inhouseapplikationen gehen die Installateure immer mehr dazu über, LWL-Verbinder für Multimodeglasfasem direkt im Feld zu konfektionieren, anstelle ein vorkonfektioniertes Pigtail (d.h., einen Verbinder mit angeschlossenem LWL-Abschnitt) an das Kabel anzuspleissen. Diese direkte Feldkonfektion wird zum einen durch die Platzverhältnisse in den Kabelkanälen notwendig und bietet zum anderen unter gewissen Voraussetzungen auch erhebliche Kostenvorteile auf Basis des installierten Verbinders.

Bei der Konfektion eines LWL-Verbinders im Feld zeigt es sich besonders deutlich, dass die Kosten der Verarbeitung wesentlich über denjenigen der Verbinder selbst liegen. Bei herkömmlichen Verbindern beträgt die Dauer der Konfektionierung in einem Assemblyshop etwa 4-6 Min., während für die Konfektionierung im Felde 15-20 Min. zu veranschlagen sind. Entsprechend ergibt sich ein Verhältnis der Verbinderkosten zu den Konfektionierungskosten von 1 : (1-1,5) im Assemblyshop gegenüber 1 : (4-5) bei der Feldkonfekionierung. Die unterschiedliche Dauer zwischen Konfektionierung im Feld und im Assemblyshop erklärt sich im wesentlichen durch den grösseren Einfluss von Rüst- und Wartezeiten bei weniger konfektionierten Verbindern pro Konfektionsstelle sowie der montageunfreundtichen Umgebung im Feld. Um einen Verbinder mit einem möglichst grossen Wettbewerbsvorteil auszustatten, ist es dementsprechend wichtig, sich auf den Verarbeitungsprozess zu konzentrieren.

In den meisten Ländern ausserhalb des deutschsprachigen Raumes werden LWL-Verbinder, die zur Gebäudeinfrastruktur gehören, im Feld konfektioniert. Um dies zu bewerkstelligen, werden zum Teil aufwendige "Feldwerkstätten" aufgebaut, teure Spezialverbinder eingesetzt, oder mit grossem zeitlichem Aufwand die Verbinder unter montageunfreundlichen Verhältnissen konfektioniert.

Im deutschsprachigen Raum dominiert derzeit noch die Methode, ein vorkonfektioniertes Pigtail an das Kabel anzuspleissen. Diese relativ teure Methode konnte sich bisher jedoch nur halten, weil es relativ aufwendig ist, einen Verbinder direkt vor Ort zu konfektionieren. Das Spleissen setzt neben gut geschulten Arbeitskräften auch eine vergleichsweise hohe Werkzeuginvestition voraus.

Die Kommunikationsverkabelung innerhalb von Gebäuden und Werksarealen wird in der Regel nach der Normierung für strukturierte Gebäudeverkabelung EN 50 173 (TIA 568) ausgeführt. Diese Normierung sieht die Unterteilung in drei Zonen (Backbone-, Steig- und Horizontalzone) vor. Während in der Vergangenheit oft nur die Backbonezone in LWL realisiert wurde, wird heute vermehrt auch die Steigzone bis hin zur Horizontalverkabelung (FTTD) mit LWL verkabelt. Durch diesen dezentralisierteren Einsatz von Lichtwellenleitern nimmt die Anzahl der zu konfektionierenden LWL-Verbinder pro Installationsstelle ab, womit Einricht- und Wartezeiten z.T. drastisch an Bedeutung gewinnen. Diese Umstände zwingen den Installateur in der Zukunft, vermehrt auf Produkte zurückzugreifen, die für die Konfektion im Feld optimiert sind. Die zum Teil gebräuchliche Alternative mit anspleissen eines Pigtails stösst spätestens am Arbeitsplatz ebenfalls auf ihre Grenzen, da an der Kommunikationsdose zu wenig Platz für die Ausführung eines Spleisses besteht. Ferner schreibt der Standard derzeit die Verwendung eines SC- resp. ST-Verbinders vor.

Vor allem in Ländern, in denen die Feldkonfektion eine starke Bedeutung besitzt, wurden bereits Lösungen vorgestellt, die der Bedeutung der Konfektionszeit Rechnung tragen. Diese Lösungen bergen jedoch in der Regel einen oder mehrere der folgenden Nachteile:
- Negative Beeinflussung der Leistungsfähigkeit resp. der Zuverlässigkeit
- Kostenintensives Grundprinzip
- Proprietärer Standard
- Nur partielle Reduktion der Montagezeit

Eine der bekannten Lösungen besteht darin, einen mit einem thermoplastischen Kleber vorgefüllten Steckverbinder zu verwenden, der beim Konfektionieren vor dem Einführen des vorbereiteten lichtwellenleiters lediglich erwärmt wird (siehe z.B. die US-A-4,984,865). Nachteilig ist bei dieser Art der Konfektionierung vor allem, dass eine vergleichsweise grosse Masse an Material (Kleber und Stecker) auf relative hohe Temperaturen (z.B. 204°C) erwärmt werden muss, was einen erheblichen Aufwand an Energie erfordert, der durch batteriebetriebene Geräte nur schwer bereitgestellt werden kann, so dass eine lokale Netzversorgung nahezu unumgänglich ist.

Eine andere bekannte Lösung wird als "crimp + polish"-Verfahren bezeichnet (siehe z.B. die US-A-4,679,895). Bei diesem Verfahren wird der Lichtwellenleiter ohne Klebstoff im Stecker fixiert, wobei die freiliegende Faser frei in der Bohrung einer Ferrule sitzt und am freien Ende poliert wird. Dem Vorteil der fehlenden Klebung stehen hierbei als Nachteile gegenüber, dass die Faserführung nicht eindeutig definiert ist (die Faser "schwimmt"), dass die Ferrule mit der Bohrung genauer sein muss und damit wesentlich teuerer ist, und dass das Polieren der Faser aufwendig und diffizil ist.

Ein weiteres bekanntes Verfahren zur Konfektionierung ("crimp + cleave"; siehe z.B. die US-A-5,131,063) hat ähnliche Vor- und Nachteile wie das vorgenannte "crimp + polish"-Verfahren, mit dem Unterschied, dass anstelle des Polierens die Faser gebrochen wird. Hierdurch entfällt zwar der aufwendige Poliervorgang, jedoch sind die optischen Werte der Steckverbindung deutlich schlechter.

Ein weiteres bekanntes Verfahren ("fiber stub + mechanical splice*; siehe z.B. die US-A-4,877,303) verwendet ein Stecker-Frontteil mit bereits eingesetztem Faserabschnitt ("fiber stub"), an dessen hinteres Ende das Faserende des LWL-Kabels im Stecker fixiert anstösst. Obgleich hierbei kurze Montagezeiten erreichbar sind und das Polieren entfällt, ergeben sich durch die zusätzliche Verbindungsstelle erhöhte Zuverlässigkeitsrisiken. Darüber hinaus ist das vorkonfektionierte Frontteil ähnlich teuer wie ein Pigtail.

Ein anderes bekanntes Verfahren ("fiber stub + fusion splice"; siehe z.B. die US-A-4,598,974) arbeitet ähnlich wie das vorher genannte, mit dem Unterschied, dass der Faserabschnitt des Frontteils mit dem Faserende des LWL-Kabels verschweisst wird. Nachteilig ist hier vor allem, dass teuere Werkzeuge erforderlich sind, dass ein Präzisionsarbeitsgang im Feld erforderlich ist, und dass z.T. eine Netzversorgung notwendig ist.

Andere Verfahren, wie sie z.B. in der US-A-5,757,997 beschrieben werden, kommen ganz ohne Ferrulen aus, erfordern jedoch Präzisionswerkzeuge und entsprechen nicht den Standards für eine strukturierte Gebäudeverkabelung.

Aus der US-A-5,102,21 ist ein Steckverbinder für optische Kabel bekannt, bei denen die im Kabel verlaufende Faser mechanisch ohne Klebstoff durch Klemmen fixiert wird.

### DARSTELLUNG DER ERFINDUNG

Es ist daher Aufgabe der Erfindung, ein Verfahren und eine Vorrichtung zur Konfektionierung von faseroptischen Verbindern anzugeben, die - insbesondere für die Verkabelung von Gebäuden - unter den erschwerten Bedingungen des Feldeinsatzes einfach, schnell und sicher durchzuführen bzw. einzusetzen sind und keine teuren Spezialwerkzeuge erfordern, sowie einen Steckverbinder für den Einsatz bei einem solchen Verfahren zu schaffen.

Die Aufgabe wird durch die Gesamtheit der Merkmale der Ansprüche 1, 14 und 27 gelöst. Der Kern der Erfindung besteht darin, ausgehend von der aus der WO-A1-99/04299 bekannten Art der Verklebung diese Verklebung in einem batteriebetriebenen Handgerät vorzunehmen, wobei zunächst der Stecker mit dem Steckerstift in eine am Handgerät angebrachte Aufnahme eingeführt und dort gehalten wird, in der der Steckerstift von einem batteriebetriebenen elektrischen Heizelement umgeben ist, dann der Lichtwellenleiter mit der Faser in den Stecker eingeführt und über im Handgerät angeordnete Betätigungsmittel im Stecker geklemmt wird, und schliesslich durch Aufheizen des Steckerstiftes mit dem Heizelement die Klebung durchgeführt wird. Das Handgerät kann dabei einfach in einer Hand gehalten werden, während mit der anderen Hand der Stecker in die Aufnahme eingeführt und dann der Lichtwellenleiter in den Stecker eingeführt wird. Da der Aufheizvorgang auf die Ferrule selbst beschränkt ist und die Klebermenge sehr klein ist, kann auf einen Netzbetrieb vollständig verzichtet werden.

Eine erste bevorzugte Ausgestaltung des Verfahrens nach der Erfindung ist dadurch gekennzeichnet, dass nach Einführen des Steckers in die Aufnahme und vor dem Einführen des Lichtwellenleiters in den Stecker der Steckerstift mittels des Heizelements auf eine Vorheiztemperatur vorgeheizt wird, dass nach dem Einführen des Lichtwellenleiters in den Stecker und dem dortigen Klemmen der Steckerstift mittels des Heizelements auf eine Aushärtetemperatur aufgeheizt wird, welche höher ist als die Vorheiztemperatur, und dass die Vorheizphase automatisch beendet wird, wenn nicht innerhalb einer vorgebenen Zeit die Aufheizung auf die Aushärtetemperatur eingeleitet wird. Hierdurch wird eine sichere Klebung erreicht und der Einsatz an elektrische Heizenergie auf ein Minimum beschränkt.

Ein zweite bevorzugte Ausgestaltung des erfindungsgemässen Verfahrens zeichnet sich dadurch aus, dass nach dem Verkleben der Faser mit dem Steckerstift am hinteren Ende des im Handgerät gehaltenen Steckers ein Knickschutz befestigt wird, welcher vor dem Eintauchen des Lichtwellenleiters in den Klebstoff über den Lichtwellenleiter geschoben worden ist, dass der Knickschutz mittels einer im Knickschutz angeordneten Mutter befestigt wird, welche mit ihrem Innengewinde auf ein entsprechendes Aussengewinde am hinteren Ende des Steckers aufgeschraubt wird, dass Innengewinde und Aussengewinde als konische Rundgewinde ausgebildet sind, dass der Lichtwellenleiter zwischen einem äusseren Mantel und einer innenliegenden Ader eine Vielzahl von in Längsrichtung verlaufenden Verstärkungsfasem aufweist, und dass die Verstärkungsfasern beim Aufschrauben des Knickschutzes zwischen Innengewinde und Aussengewinde eingeklemmt werden. Hierdurch wird auf einfache Weise mit dem Anbringen des Knickschutzes zugleich eine Zugentlastung erreicht.

Bevorzugt sind der Knickschutz und die Mutter als separate Teile ausgebildet, welche durch drehmomentbegrenzende Verbindungsmittel miteinander formschlüssig verbunden sind. Beim Aufschrauben des Knickschutzes auf den Stecker wird die Mutter solange angezogen, bis die Drehmomentbegrenzung einsetzt; dann wird der Knickschutz über die Mutter nach vorne geschoben und es werden durch Drehen des Knickschutzes aus der Mutter nach vorne heraushängende Verstärkungsfasern in einen ringförmigen Aufnahmeraum zwischen Stecker und Knickschutz eingezogen.

Vorzugsweise ist am Handgerät unterhalb der Aufnahme ein Schlitz vorgesehen, durch welchen die Faser des Lichtwellenleiters, die nach dem Verkleben aus der Bohrung im Steckerstift hervorsteht, von aussen zugänglich ist. Nach dem Verkleben wird die hervorstehende Faser durch Einführen eines Ritzwerkzeuges in den Schlitz in unmittelbarer Nähe des Steckerstiftes angeritzt und anschliessend gebrochen. Zum Brechen der angeritzten Faser werden vorzugsweise unterhalb des Schlitzes im Handgerät angeordnete Mittel in Querrichtung gegen die hervorstehende Faser gedrückt. Aus Umweltschutzgründen ist es dabei besonders günstig, wenn der abgebrochene Abschnitt der Faser in einem im Handgerät unterhalb des Schlitzes angeordneten Faserbehälter aufgefangen und gesammelt wird.

Das erfindungsgemässe Verfahren vereinfacht sich weiter, wenn am Handgerät eine Kleberpatrone mit dem pulverförmigen Reaktionskleber angeordnet ist, welcher von oben durch eine Oeffnung zugänglich ist, die mit einer drehbaren Hülse verschliessbar ist, und wenn zum Eintauchen der freigelegten Faser n den Klebstoff die Hülse in die Oeffnungsstellung verdreht und nach dem Herausziehen der Faser in die Verschlussstellung zurückgedreht wird.

Eine bevorzugte Ausgestaltung der erfindungsgemässen Vorrichtung ist dadurch gekennzeichnet, dass die Aufnahme auf das Handgerät aufsteckbar ist, wobei für den elektrischen Anschluss des Heizelementes entsprechende Kontaktbuchsen und Kontaktstifte vorgesehen sind und zwischen der Aufnahme und dem Handgerät ein Schlitz frei bleibt, über den der im Heizelement steckende Steckerstift von aussen zugänglich ist, dass das Heizelement eine auf eine Hülse gewickelte zylindrische Spule aus einem Heizdraht umfasst, dass die Hülse mit dem Heizdraht im Zentrum einer Federplatte in Richtung der Steckerachse des eingeführten Steckers auslenkbar angeordnet ist, dass die Federplatte als Leiterplatte ausgebildet ist und zum Anschluss des Heizdrahtes dient, und dass die Federeigenschaften der Federplatte durch zwei spiralförmig ineinandergreifende, konzentrische Ausfräsungen in der Leiterplatte erzeugt werden. Hierdurch wird eine verbesserte Anpassung der Aufnahme an die eingeführten Stecker erreicht.

Eine andere bevorzugte Ausgestaltung der Vorrichtung nach der Erfindung zeichnet sich dadurch aus, dass der Adapter lösbar mit der Aufnahme verbunden ist, dass der Adapter zwei Schieber umfasst, welche einander gegenüberliegend quer zur Steckerachse des eingeführten Steckers verschiebbar sind, dass der eingeführte Stecker zwischen den beiden Schiebern klemmend gehalten werden kann, und dass die beiden Schieber mittels eines dazu quer verschiebbaren Arretierschiebers in der klemmenden Stellung arretiert werden können.

Eine bevorzugte Ausgestaltung des erfindungsgemässen Steckverbinders ist dadurch gekennzeichnet, dass am Innenteil und an der Hülse Rastmittel vorgesehen sind, welche die beiden Teile miteinander verrasten, wenn das Innenteil zum Klemmen einer Ader in die Hülse hineingeschoben wird.

Eine andere bevorzugte Ausgestaltung zeichnet sich dadurch aus, dass ein Knickschutz vorgesehen ist, welcher am hinteren Ende des Steckers anbringbar ist, dass der Stecker zum Anbringen des Knickschutzes am hinteren Ende ein konisches Aussengewinde aufweist, dass eine Mutter mit einem entsprechenden konischen Innengewinde vorgesehen ist, welche mit dem Knickschutz auf das Aussengewinde aufschraubbar ist und den Knickschutz am Stecker hält, dass Aussengewinde und Innengewinde als Rundgewinde ausgebildet sind, und dass am Aussengewinde Mittel, insbesondere in Form einer tangential orientierten Schneidplatte, angeordnet sind, welche ein Rückdrehen der Mutter auf dem Aussengewinde verhindern.

Bevorzugt ist die Mutter lösbar in einem am Knickschutz angeformten Hülsenteil angeordnet, und ist zur formschlüssigen Verbindung mit Drehmomentbegrenzung zwischen Mutter und Knickschutz am äusseren Umfang der Mutter und am inneren Umfang des Hülsenteils jeweils eine Rändelung vorgesehen, welche Rändelungen miteinander in Eingriff stehen.

Weitere Ausgestaltungen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer teilweise in Längsrichtung geschnitteten Darstellung ein bevorzugtes Ausführungsbeispiel eines Steckers nach der Erfindung;
- Fig. 2: in einer teilweise in Längsrichtung geschnittenen Darstellung einen zum Stecker nach Fig. 1 passenden Knickschutz;
- Fig. 3: in einem Ausschnitt die Draufsicht auf die (innere) Rändelung im Knickschutz aus Fig. 2;
- Fig. 4: die Draufsicht auf die (äussere) Rändelung der im Knickschutz aus Fig. 2 angeordneten Mutter;
- Fig. 5: einen Längsschnitt durch ein bevorzugtes Ausführungsbeispiel des Handgerätes nach der Erfindung;
- Fig. 6: einen (vergrösserten) Längsschnitt durch die Aufnahme des Handgerätes aus Fig. 5;
- Fig. 7: eine Draufsicht auf die Unterseite eines bevorzugten Adapters zur Halterung des Steckers im Handgerät nach Fig. 5;
- Fig. 8: einen Längsschnitt durch das Unterteil des Adapters aus Fig. 7;
- Fig. 9: einen Längsschnitt durch den vollständigen Adapter;
- Fig. 10: eine Draufsicht von oben auf das Unterteil des Adapters mit den Schiebern und dem Arretierschieber;
- Fig. 11: eine Seitenansicht des Heizelements aus der Aufnahme von Fig. 6;
- Fig. 12: die Draufsicht von oben auf die Aufnahme nach Fig. 11;
- Fig. 13: den beispielhaften Aufbau eines Lichtwellenleiters, wie er bei der erfindungsgemässen Konfektionierung zum Einsatz kommt;
- Fig. 14A-C: in verschiedenen Teilansichten ein bevorzugtes Ausführungsbeispiel eines Ritzwerkzeuges mit einer Keramik-Schneide, wie es im Zusammenhang mit dem Handgerät nach Fig. 5 vorteilhaft eingesetzt werden kann, wobei die Teilfigur 14C den vergrösserten Ausschnitt X aus Teilfigur 14A zeigt;
- Fig.15: in der Draufsicht von oben ein bevorzugtes Ausführungsbeispiel für eine Werkzeugbox, in welcher die Werkzeuge und das sonstige Zubehör für die Durchführung des erfindungsgemässen Verfahrens sicher und leicht zugänglich untergebracht werden können;
- Fig. 16: eine perspektivische Ansicht der Werkzeugbox nach Fig. 15; und
- Fig. 17: in der Draufsicht von oben ein Verpackungsbehälter für Kleinteile, welcher mit der Werkzeugbox aus Fig. 15 lösbar verbunden werden kann.

### WEGE ZUR AUSFÜHRUNG DER ERFINDUNG

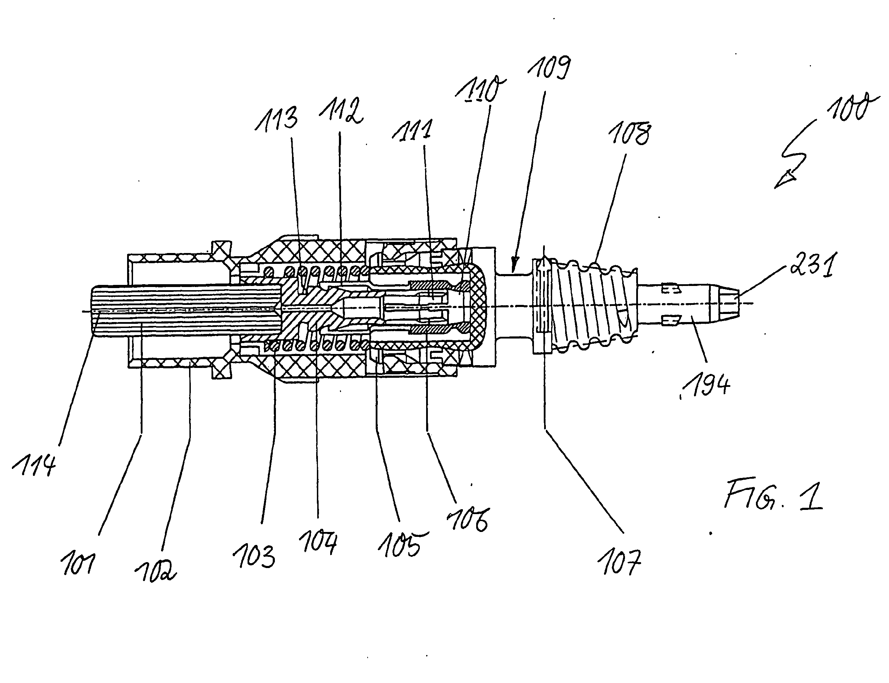

In Fig. 1 und 2 sind die wesentlichen Teile eines Steckverbinders gemäss einem bevorzugten Ausführungsbeispiel der Erfindung in einer teilweise in Längsrichtung geschnittenen Darstellung wiedergegeben, wobei sich Fig. 1 auf einen Stecker . 100 bezieht, und Fig. 2 auf einen zu dem Stecker 100 passenden Knickschutz 115. Der Steckverbinder 100, 115 ist vorgesehen für einen Lichtwellenleiter 200, der die Form einer einfachen Ader aufweisen kann oder als ein vollständiges Kabel ausgebildet sein kann, dessen Aufbau beispielhaft in Fig. 13 gezeigt ist, und das eine innere Faser 205 aus Glas mit entsprechender optischer Auslegung aufweist. Die Faser 205 ist mit einer Beschichtung ("coating") 204 versehen und in einer Ader 203 angeordnet. Die Ader 203 ist Ihrerseits von einem äusseren Mantel 201 umgeben. Zwischen Mantel 201 und Ader 203 verläuft in Längsrichtung eine Vielzahl von dünnen Verstärkungsfasern 202, die z.B. aus Aramid bestehen.

Der Stecker 100 umfasst ein längliches äusseres Gehäuse 102. In das Gehäuse 102 ist vom hinteren Ende her eine Zugentlastung 105 einrastend eingesteckt. Die Zugentlastung 105 geht ausserhalb des Gehäuses 102 über in ein konisches Aussengewinde 108, das als Rundgewinde ausgebildet ist. Zwischen dem Aussengewinde 108 und dem in das Gehäuse 102 eingesteckten Teil der Zugentlastung 105 ist eine ringförmige Einschnürung vorgesehen, die einen Aufnahmeraum 109 für die Verstärkungsfasern 202 des Lichtwellenleiters 200 bildet. Hinter dem Aussengewinde 108 ist ein rohrförmiger Ansatz 194 angeformt, über den bei der Konfektionierung der Steckverbindung der Mantel 201 des Lichtwellenleiters 200 geschoben wird. Das Einführen der Ader 203 in den Ansatz 194 wird durch eine halbschalenförmige Einführrinne 231 erleichtert, die als Einführhilfe am freien Ende des Ansatzes 194 angeformt ist.

Im Inneren des Gehäuses 102 ist konzentrisch ein Steckerstift (eine Ferrule) 101 untergebracht. Der Steckerstift 101 besteht aus einer Präzisionskeramik und weist eine zentrale Bohrung 114 auf, in welche der Lichtwellenleiter 200 mit der Faser 205 eingeführt und eingeklebt wird. Der Steckerstift 101 ist am einen Ende eines Innenteils 104 in eine entsprechende Ausnehmung eingesetzt bzw. eingepresst und dort gehalten. Das Innenteil 104 ist mit einer Durchgangsbohrung zur Durchführung des Lichtwellenleiters 200 ausgestattet. Es läuft am dem Steckerstift 101 gegenüberliegenden Ende in mehrere Klemmarme 111 aus, welche die Ader 203 eines durchgeführten Lichtwellenleiters 200 ringförmig umgeben. Das Innenteil 104 erstreckt sich mit seinen Klemmarmen 111 in eine konzentrisch angeordnete Hülse 106 hinein. Die Hülse 106 weist eine konische Verengung 110 auf, in welcher die Klemmarme 111 klemmend zusammengepresst werden, wenn das Innenteil 104 von der in Fig. 1 dargestellten Position nach rechts weiter in die Hülse 106 hineingeschoben wird. Die Hülse 106 ihrerseits ist an ihrem dem Steckerstift 101 zugewandten Ende mit Rastarmen 112 ausgestattet, die hinter einer Rastkante 113 am Innenteil einrasten, wenn das Innenteil 104 weit genug in die Hülse 106 hineingeschoben wird. Auf diese Weise werden Innenteil 104 und Hülse 106 in der Position miteinander verrastet, in der die Klemmarme 111 eine eingeführte Ader 203 klemmend halten.

Der beschriebene Klemmvorgang wird dadurch bewirkt, dass gegen die Kraft einer Druckfeder 103 der Steckerstift 101 von aussen axial in das Gehäuse 102 eingedrückt wird. Die Druckfeder 103 stützt sich mit dem einen Ende an der Stirnseite der Zugentlastung 105 und mit dem anderen Ende an einer am Innenteil 104 angeformten Schulter ab. Sind die Hülse 106 und das Innenteil 104 nach Beendigung des Klemmvorgangs miteinander verrastet, kann der Steckerstift 101 beim Einsteckvorgang frei federnd in das Gehäuse 102 zurückfahren.

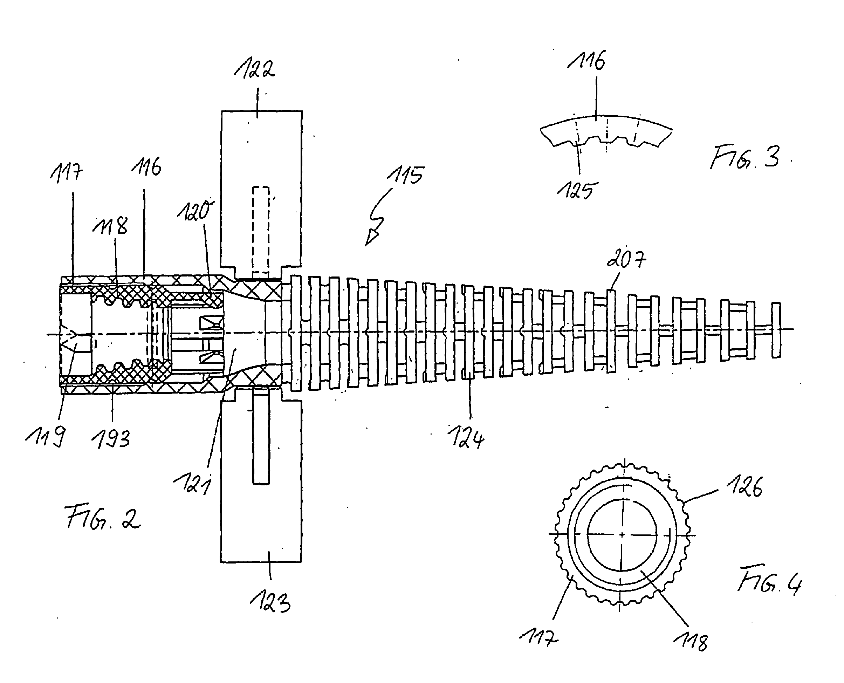

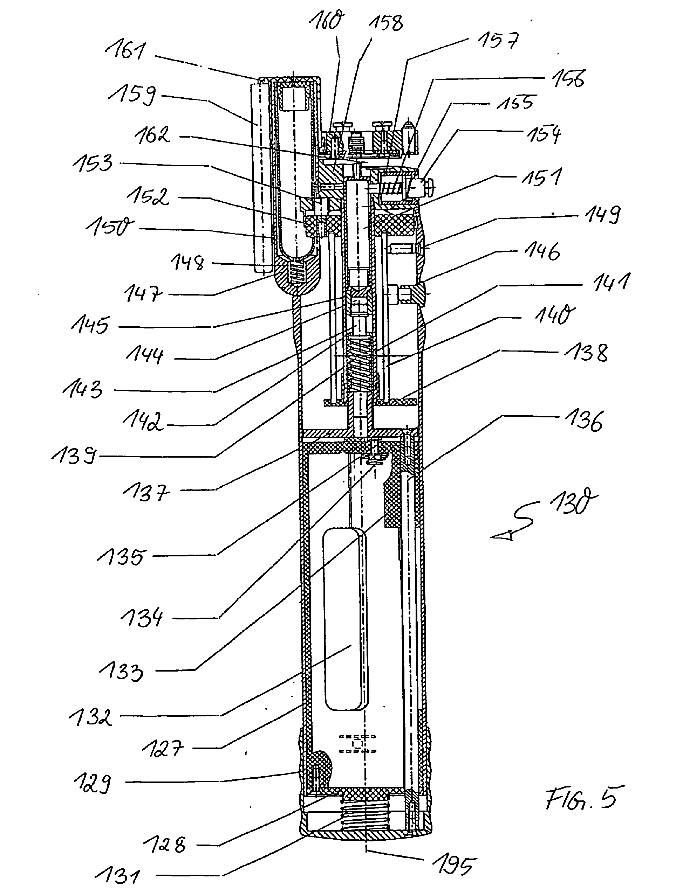

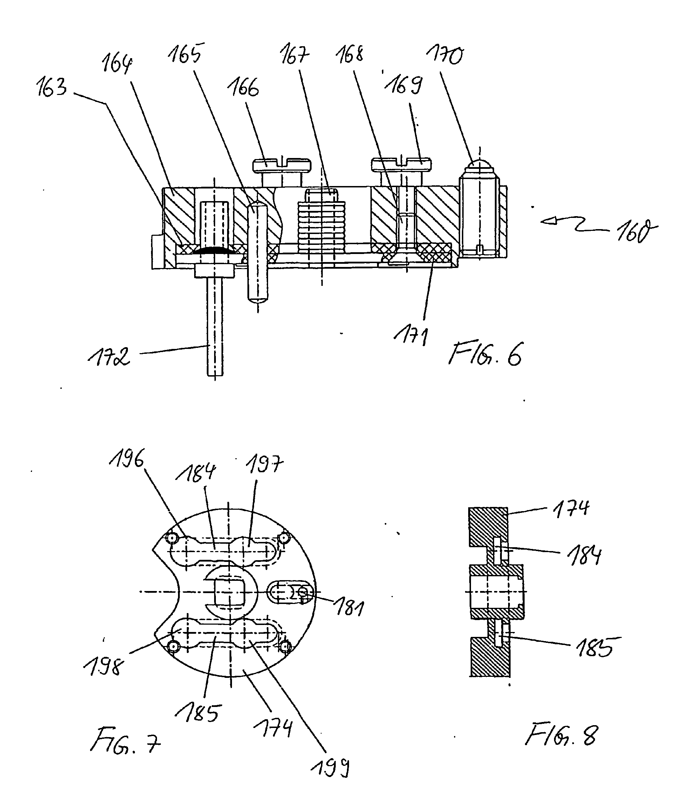

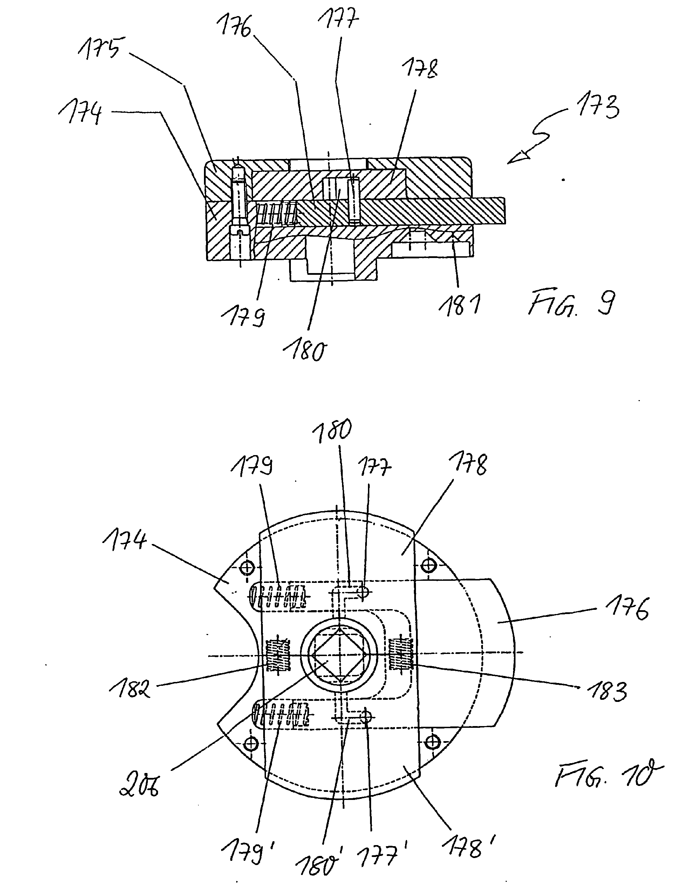

Am Stecker 100 kann mittels des Aussengewindes 108 ein Knickschutz 115 gemäss Fig. 2 lösbar befestigt werden. Der Knickschutz 115 umfasst eine biegsame Knickschutztülle 124, die am vorderen Ende in ein Hülsenteil 116 übergeht. Im Inneren des hohlzylindrischen Hülsenteils 116 ist konzentrisch eine separate Mutter 117 angeordnet. Die Mutter 117 hat ein zum Aussengewinde 108 passendes konisches Innengewinde 118, das ebenfalls als Rundgewinde ausgebildet ist. Die Mutter 117 ist in das Hülsenteil 116 eingesteckt und im Hülsenteil 116 in axialer Richtung verschiebbar. Die Mutter 117 wird durch Drehung des Hülsenteils 116 gedreht, wobei eine formschlüssige Verbindung zwischen den beiden Teilen durch zwei miteinander in Eingriff stehende Rändelungen 125 und 126 erreicht wird, die gemäss Fig. 3 und 4 auf dem inneren Umfang des Hülsenteils 116 bzw. auf dem äusseren Umfang der Mutter 117 angeformt sind. Die Rändelungen 125, 126 sind mit den schrägen Flanken ihrer Zähne so ausgestaltet, dass sie aufgrund des nachgiebigen Kunststoffmaterials, aus dem beide Teile 116 und 117 hergestellt sind, ausser Eingriff geraten, wenn ein gewisses Drehmoment überschritten wird. Auf diese Weise wird eine Drehmomentbegrenzung verwirklicht, die beim Aufschrauben der Mutter 117 auf das Aussengewinde 108 am Stecker 100 ein Ueberdrehen sicher verhindert. Am Aussengewinde 108 ist weiterhin eine tangential in Einschraubrichtung orientierte Schneidplatte 107 eingelassen. Die Schneidplatte 107 verhindert ein Rückdrehen der Mutter 117 auf dem Aussengewinde 108.

Die Knickschutztülle 124 verjüngt sich nach aussen zu konisch. Der Innendurchmesser am Ende der Knickschutztülle 124 ist so bemessen, dass ein Lichtwellenleiter in Form einer Ader 203, d.h. ohne Verstärkungsfasern 202 und Mantel 201, hindurchgeschoben werden kann. Wird dagegen ein vollständiges Kabel mit Verstärkungsfasern 202 und Mantel 201 konfektioniert, muss die Knickschutztülle 124 zur Vergrösserung der Durchgangsweite entsprechend gekürzt werden. Zur Erleichterung beim Kürzen ist an der Knickschutztülle 124 ein Markierungsring 207 angebracht, der sich durch einen vergrösserten Durchmesser auszeichnet, und der anzeigt, wo die Knickschutztülle 124 in diesem Fall abgeschnitten werden muss..

Um für das Aufschrauben der Mutter 117, das bei der Konfektionierung des Steckverbinders durch die zwischen Aussengewinde 108 und Mutter 117 eingeklemmten Verstärkungsfasern 202 des Lichtwellenleiters 200 erschwert wird, ein ausreichendes Drehmoment zur Verfügung zu stellen, sind am Knickschutz 115 auf der Aussenseite einander gegenüberliegend zwei Flügel 122, 123 angeformt, die nach dem Aufschrauben durch Abbrechen an einer Sollbruchstelle entfernt werden können. Die Sollbruchstelle wird dabei direkt am Knickschutz 115 durch Ausbildung einer rillenförmigen Vertiefung erzeugt. Weiterhin sind am hinteren Ende der Mutter 117 Klemmarme 120 angeformt. Wird nach dem Aufschrauben der Mutter 117 der Knickschutz 115 mit dem Hülsenteil 116 über die Mutter 117 nach vorne geschoben, werden die Klemmarme in einer konischen Verengung 121 im Hülsenteil 116 klemmend zusammengedrückt und fixieren so den durch den Knickschutz 115 geführten Lichtwellenleiter. Auch hier werden Hülsenteil 116 und Mutter 117 in der Klemmstellung mittels einer auf dem äusseren Umfang der Mutter 117 angeordneten Rastrille 193 miteinander verrastet. Beim Vorschieben des Knickschutzes 115 über die Mutter 117 wird ein Paar von Einlaufschlitzen 119 am vorderen Ende des Hülsenteils 116 freigelegt. Wird der Knickschutz 115 in dieser Position im richtigen Drehsinn gedreht, erfassen die Einlaufschlitze 119 die zwischen Mutter 117 und dem Aussengewinde 108 heraushängenden Verstärkungsfäden 202 (Fig. 13) und wickeln diese im Aufnahmeraum 109 auf. Der über die Mutter 117 hinaus vorgeschobene Abschnitt des Hülsenteils 116 überdeckt dann den mit den Verstärkungsfäden gefüllten Aufnahmeraum 109.

Die Konfektionierung der Steckverbindung mit dem Steckverbinder 100, 115 gemäss Fig. 1 und 2 und dem Lichtwellenleiter 200 gemäss Fig. 13 wird erfindungsgemäss im Feld mittels eines kompakten Handgerätes durchgeführt, wie es in einem bevorzugten Ausführungsbeispiel in Fig. 5 dargestellt ist. Das Handgerät 130, das mit einer Hand umfasst und gehalten werden kann, hat ein rohrförmiges Gehäuse 127 aus Metall. In der unteren Hälfte des Gehäuses 127 ist ein Akkupack 132 untergebracht, der mit einem Batteriehalter 133 und entsprechenden Kontaktfedern 134 ausgestattet ist. Der Akkupack 132 liefert die notwendige Energie für die beim Verkleben der Faser eingesetzte elektrische Heizeinrichtung. Die elektrische Verbindung wird mittels Lötfahnen 135 hergestellt die am oberen Ende des Akkupacks 132 angebracht sind. Unterhalb des Akkupacks 132 ist das Gehäuse 127 durch einen Boden 128 nach unten abgeschlossen. Nach oben hin bildet ein scheibenförmiger Körper 158 den Abschluss. Oberhalb des scheibenförmigen Körpers 158 ist eine Aufnahme 160 in das Handgerät 130 eingesteckt. Die Aufnahme 160, die das für die Verklebung notwendige Heizelement 167 enthält, ist in Fig. 6 separat und vergrössert dargestellt und wird weiter unten noch näher erläutert. Die elektrische Verbindung der Aufnahme 160 mit dem Handgerät 130 erfolgt über Kontaktbuchsen 153 und entsprechende Kontaktstifte 172, 172' an der Aufnahme 160 bzw. dem Heizelement 167 (Fig. 6, 11 und 12).

In dem Raum des Gehäuses 127, der sich zwischen dem scheibenförmigen Körper 158 und dem Akkupack 132 befindet, ist die elektronische Steuerung für den Aufheizvorgang während der Konfektionierung untergebracht. Die Steuerung ist auf zwei Elektronikplatinen 140 angeordnet, die vertikal und parallel zueinander zwischen einem oberen Einsatz 152 und einem unteren Flansch 138 gehalten werden. Die Bedienung der Steuerungselektronik erfolgt über einen aus dem Gehäuse 127 nach aussen vorstehenden Betätigungsknopf 146. Zur Anzeige des jeweiligen Betriebszustandes sind auf der einen Elektronikplatine 140 nebeneinander drei LEDs angeordnet, deren Licht durch Lichtleiter 149 nach aussen übertragen wird.

In der Achse 195 des Handgerätes 130 sind zwischen der Aufnahme 160 und dem Akkupack 127 Betätigungsmittel angeordnet, mit denen - wie weiter oben beschrieben - der Steckerstift 101 eines von oben in die Aufnahme 160 eingeführten und dort gehaltenen Steckers 100 zum Klemmen der Ader 203 in das Gehäuse 102 des Steckers 100 hineingedrückt werden kann. Die Betätigungsmittel umfassen einen Bolzen 143, der mit seinem unteren Ende in Achsrichtung verschiebbar in einem Flansch 137 gelagert ist und an seinem oberen Ende eine Hülse 145 trägt, in deren Innerem eine Magnet 144 befestigt ist. Der Bolzen 143 ist durch eine sich am Flansch 137 abstützende Druckfeder 139 nach oben vorgespannt und wird durch eine weitere Hülse 142 am Flansch 137 gehalten. Er kann sich daher gegen den Druck der Druckfeder 139 relativ zum Flansch 137 nach unten bewegen (einfedern). Oberhalb des Magneten 144 ist in die dortige Hülse 145 ein zylindrischer Faserbehälter 151 mit seinem metallischen Boden herausnehmbar eingesetzt und magnetisch gehalten. Der Faserbehälter 151 weist am oberen Ende ein nach oben offenes Röhrchen auf, das, wenn der Faserbehälter 151 nach oben geschoben wird, direkt den Steckerstift 101 des in die Aufnahme 160 eingesetzten Steckers 100 beaufschlagt und nach oben drückt. Der Faserbehälter 151 und die beiden Hülsen 142, 145 gleiten in einer rohrförmigen Führung 141, die zwischen den Elektronikplatinen 140 verläuft und mit dem einen Ende am (festen) Flansch 138 und mit dem anderen Ende am scheibenförmigen Körper 158 befestigt ist.

Der Faserbehälter 151 wird durch Hochschieben des Flansches 137 nach oben verschoben. Der Flansch 137 selbst wird dabei über eine am Akkupack 132 seitlich vorbei nach unten geführte Stange 136 betätigt, die mit einem topfförmigen Bedienteil 129 verbunden ist, das über das unteren Ende des Gehäuses 127 gestülpt ist und mittels einer sich am Boden 128 abstützenden Druckfeder 131 vorgespannt ist. Wird das Bedienteil 129 gegen den Druck der Druckfeder 131 nach oben geschoben, wird diese Bewegung über die Stange 136, den Flansch 137, die Druckfeder 139 und den Bolzen 143 auf den Faserbehälter 151 übertragen.

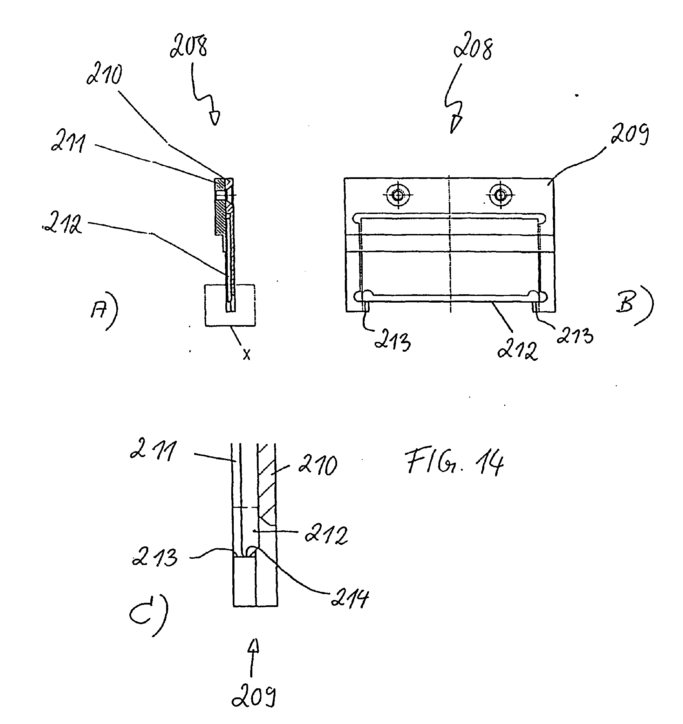

In den Faserbehälter 151 ragt am oberen Ende seitlich durch ein entsprechendes Langloch ein von aussen bedienbarer Bolzen 154 hinein. Der Bolzen 154 ist in einer im Körper 158 eingelassenen Hülse 157 geführt und kann gegen den Druck einer ersten Druckfeder 156 in den Faserbehälter 151 hineingedrückt und gegen den Druck einer zweiten Druckfeder 155 aus dem Faserbehälter 151 herausgezogen werden. Der Bolzen 154 dient zum Abbrechen einer nach dem Verkleben aus dem Steckerstift 101 nach unten herausstehenden Faser 205 und sichert zugleich den Faserbehälter 151 gegen ein Herausfallen aus dem Handgerät 130. Dem Abbrechen voraus geht ein Anritzen der Faser mittels eines speziellen Ritzwerkzeuges 208 (Fig. 14). Das Ritzwerkzeug 208 umfasst eine Schneide 212 (aus Keramik), die auf der Unterseite eine gerundete Schneidkante 214 (Fig. 14C) aufweist. Die Schneide 212 ist vertikal frei beweglich in einer Halterung 209 gelagert, die aus einem Vorderteil 211 und einem Rückteil 210 zusammengeschraubt ist. Wird das Ritzwerkzeug 208 nicht benutzt, sitzt die Schneide 212 aufgrund ihres Eigengewichtes mit der Schneidkante 214 auf zwei seitlich am Vorderteil 211 angebrachten Absätzen 213 auf. Wird das Ritzwerkzeug 208 dagegen mit der Halterung 209 durch einen im Handgerät 130 zwischen der Aufnahme 160 und dem scheibenförmigen Körper 158 freigelassenen Schlitz 162 geführt horizontal hindurchbewegt, liegt die Schneide 212 frei auf der zu ritzenden Faser 205 und drückt mit ihrem Eigengewicht mit der Schneidkante 214 auf die Faser. Auf diese Weise wird eine definierte Ritzkraft erzeugt, die ein sicheres und reproduzierbares Anritzen der Faser ermöglicht.

Der für die Verklebung der Faser 205 im Steckerstift 101 notwendige pulverförmige Klebstoff wird in einer Kleberpatrone 150 bereitgehalten. Die Kleberpatrone 150 ist in einem eigens dafür vorgesehenen, unten geschlossenen Rohr 147 am Handgerät 130 auswechselbar untergebracht und durch eine Druckfeder 148 nach oben vorgespannt. Die Faser 205 kann durch eine kleine Oeffnung im Deckel der Kleberpatrone 150 von oben in die Patrone eingeführt werden. Die Oeffnung ist durch eine Hülse 161 verschliessbar, deren Oeffnung durch ein Verschwenken der Hülse 161 mit der Oeffnung der Kleberpatrone 150 zum Fluchten gebracht werden kann. Die Hülse 161 kann auf einfache Weise verschwenkt werden, in dem der Daumen der das Handgerät 130 haltenden Hand an einem an der Hülse 161 vertikal befestigten Stift 159 angreift.

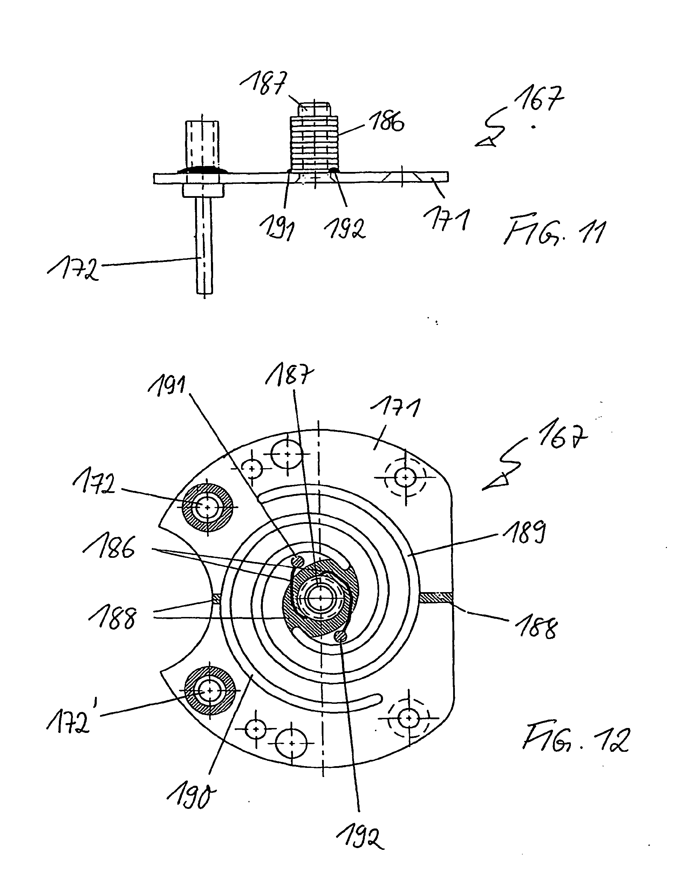

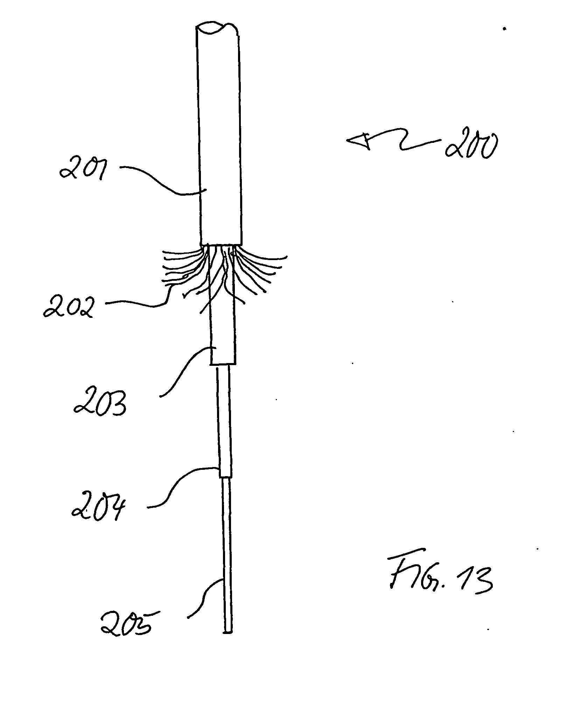

Die auf das Handgerät 130 aufsteckbare Aufnahme 160 ist für sich genommen in Fig. 6 noch einmal vergrössert dargestellt. Sie besteht aus einem scheibenförmigen Körper 164, in den auf der Oberseite vier im Rechteck angeordnete Führungen 166, 169 zur Führung des aufsteckbaren Adapters 173 (Fig. 9) eingeklebt sind. Ebenfalls eingeklebt ist ein Druckstück 170, das zur Zentrierung und Fixierung des aufgesteckten Adapters 173 dient. Von der Unterseite her ist an den Körper 164 mittels Senkschrauben 168 und unter Verwendung einer Distanzscheibe 163 das oben bereits erwähnte Heizelement 167 angeschraubt. Das Heizelement 173 ist für sich genommen noch einmal in den Fig. 11 und 12 wiedergegeben. Das Heizelement 173 ist auf einer Federplatte 171 aufgebaut, die gleichzeitig als Leiterplatte ausgebildet ist. Das Zentrum der Federplatte 171 kann aus der Plattenebene senkrecht herausfedern. Dies wird erreicht durch zwei spiralförmig ineinandergreifende, konzentrische Ausfräsungen 189, 190 in der Federplatte 171 erreicht. Durch die Ausfräsungen 189, 190 und geeignet angeordnete unbeschichtete Flächen 188 (in Fig. 12 schraffiert dargestellt) werden zugleich zwei getrennte (spiralförmige) Leiterbahnen definiert, die für den elektrischen Anschluss des im Zentrum der Federplatte 171 angeordneten Heizdrahtes 186 an die beiden Kontaktstifte 172 und 172' eingesetzt werden. Der Anschluss des Heizdrahtes 186 an die Leiterbahnen erfolgt mittels zwei Lötstellen 191, 192. Der Heizdraht 186 des Heizelementes 167 ist als Zylinderspule auf eine Hülse 187 gewickelt, in die der in das Handgerät 130 eingeführte Stecker 100 mit seinem Steckerstift 101 eintaucht. Dazu ist die Hülse 187 mit dem Heizdraht 186 in einer durchgehenden Oeffnung des Körpers 164 der Aufnahme 160 angeordnet und damit von oben zugänglich (Fig. 6).

Für die Zentrierung der Aufnahme 160 auf dem Handgerät 130 sind nach unten herausstehende Zylinderstifte 165 vorgesehen. Auf die Aufnahme 160 wird von oben ein Adapter 173 gemäss Fig. 7 bis 10 aufgesteckt. Der Adapter 173 ist in seiner Ausgestaltung auf den jeweiligen Typ des zu konfektionierenden Steckers abgestimmt. Der Adapter 173 umfasst ein scheibenförmiges Oberteil 175 und ein scheibenförmiges Unterteil 174, die miteinander verschraubt sind (Fig. 9). Das Unterteil 174 ist gemäss Fig. 7 und 8 mit zwei versenkten Schienen 184, 185 sowie einer Rastvertiefung 181 ausgestattet. Zum Befestigen des Adapters 173 an der Aufnahme 160 wird der Adapter 173 mit den kreisförmig verbreiterten Oeffnungen 196,..,199 der Schienen 184, 185 über die Köpfe der Führungen 166, 169 gesteckt und dann seitwärts verschoben, bis die Kugel des Druckstücks 170 in der Rastvertiefung 181 einrastet.

Der Adapter 173 dient zum lösbaren Halten des in das Handgerät 130 eingeführten Steckers 100. Er enthält dazu zwei gegeneinander verschiebbare, zwischen Ober- und Unterteil 175 bzw. 174 angeordnete Schieber 178, 178' (Fig. 10). Die Schieber 178, 178' bilden im zusammengeschobenen Zustand eine quadratische Oeffnung 206, in welcher der Stecker 100 mit seinem Gehäuse 102 zangenartig (sowohl gegen Verdrehung als auch in alle Richtungen gesichert) gehalten wird. Die Schieber 178, 178' sind durch zwei Druckfedern 182, 183 in Oeffnungsrichtung vorgespannt und können durch einen quer verschieblichen Arretierschieber 176 in der geschlossenen Position - wie sie in Fig. 10 gezeigt ist - arretiert werden. Der Arretierschieber 176 weist dazu zwei senkrecht stehende Zylinderstifte 177, 177' auf, die mit zugeordneten rechtwinklig abgebogenen Führungskulissen 180, 180' in den Schiebern 178, 178' in Eingriff stehen. Wird der Arretierschieber 176 von der in Fig. 10 dargestellten Position aus gegen die Kraft zweier Druckfedern 179, 179' nach links verschoben, bis die Zylinderstifte 177, 177' den Eckpunkt der Führungskulissen 180, 180' erreichen, werden die Schieber 178, 178' durch die Druckfedern 182, 183 nach aussen in die Oeffnungsposition gedrückt und geben den gehaltenen Stecker 100 frei. Umgekehrt müssen zum Halten eines Steckers 100 zunächst die Schieber 178, 178 mit der Hand von aussen zusammengeschoben werden, bis der Arretierschieber 176 von den Druckfedern 179, 179' arretierend nach rechts gedrückt wird.

Der gesamte (schrittweise) Ablauf der Konfektionierung mit den in den Figuren dargestellten Vorrichtungen kann nun beispielhaft wie folgt beschrieben werden:
(1) Handgerät 130 vorbereiten
   (a) Handgerät 130 einschalten
      - den Betätigungsknopf 146 ca. 5 s gedrückt halten
      - die rechte der drei LEDs blinkt grün (Online-Modus)
   (b) Stecker 100 einstecken
      - den Stecker 100 in den Adapter 173 stecken und ausrichten
      - Schieber 178, 178' eindrücken, bis Arretierschieber 176 herausspringt (Schieber 178, 178' sind dann arretiert)
(2) Lichtwellenleiter 200 vorbereiten
   (a) Mantel 201 entfernen
      - Mantel mit Abisolierzange auf ca. 45 mm Länge entfernen
      - bei Adern entfällt diese Operation
   (b) Knickschutz 115 kürzen
      - Knickschutztülle 124 bei einer Markierung abbrechen bzw. mit Stripper abschneiden
      - bei Adern entfällt diese Operation
   (c) Knickschutz 115 auf Lichtwellenleiter 200 setzen
      - Knickschutz soweit auf den Lichtwellenleiter 200 schieben, dass die freiliegenden Verstärkungsfasern 202 zurückgestülpt bleiben
   (d) Ader 203 und Beschichtung 204 entfernen
      - mit der Coatingzange die Faser 205 auf ca. 20 mm Länge freilegen
(3) Konfektionieren
   (a) Handgerät 130 vorheizen
      - Betätigungsknopf 146 ca. 1 s gedrückt halten
      - ein Piep ertönt beim Start der Vorheizphase, die linke der drei LEDs leuchtet rot (-> ab dieser Zeit kann die Faser 205 in den Klebstoff eingetaucht werden)
      - ein Piep ertönt, wenn die Vorheiztemperatur erreicht wird, die linke LED blinkt rot/grün (-> ab dieser Zeit kann die Faser 205 in den Stecker 100 eingeführt werden)
      - ein Doppelpiep ertönt, wenn der Fertigheizprozess ausgelöst werden kann, die linke LED leuchtet grün (-> bis zu diesem Zeitpunkt müssen die Schritte bis und mit "Ader klemmen" (s.u.) durchgeführt sein; sollte dies nicht der Fall sein, geht das Handgerät 130 nach 15 s in den Online-Modus zurück)
   (b) Faser 205 in den Klebstoff eintauchen
      - Hülse (Deckel) 161 beiseite drehen und Faser 205 in den Klebstoff in der Klebstoffpatrone 150 eintauchen, so dass die Faser 205 bis zur Ader 203 benetzt ist
   (c) Faser 205 in Stecker 100 einführen
      - Faser 205 vorsichtig in den Stecker 100 einführen
   (d) Ader 203 klemmen
      - durch Eindrücken des Bedienteils 129 unten am Handgerät 130 die Ader 203 im Stecker 100 klemmen
   (e) Fertigheizen
      - Betätigungsknopf 146 kurz drücken
      - ein Piepton ertönt beim Start der Fertigheizphase, die mittlere LED leuchtet rot (-> während dieser Zeit darf am System nichts gemacht werden)
      - ein Piepton ertönt, sobald die Aushärtetemperatur erreicht ist; die mittlere LED blinkt rot/grün (-> ab diesem Zeitpunkt darf der Stecker fertigkonfektioniert werden)
      - ein Doppelpiep ertönt, sobald die Aushärtezeit erreicht ist; die linke und die mittlere LED leuchten grün (-> ab diesem Zeitpunkt darf der Stecker 100 ausgespannt werden, sofern alle Konfektionsschritte durchgeführt sind)
   (f) Verstärkungsfasern 202 (Aramid) festdrehen
      - Knickschutz 115 zurückziehen, so dass Aramid frei wird
      - danach den Knickschutz 115 auf den Stecker 100 schrauben (Uhrzeigersinn), bis die Drehmomentbegrenzung (Rändelungen 125, 126) durchdreht; das Aramid wird somit zwischen den konischen Rundgewinden 108, 118 von Zugentlastung 105 und Knickschutz 115 festgeklemmt; die Mutter 117 wird durch die integrierte Schneidplatte 107 rückdrehgesichert
   (g) Aramid (202) einziehen
      - Knickschutz 115 nach vorne drücken und durch Drehbewegung (Uhrzeigersinn) Aramid einziehen; das Aramid wird infolge der Drehbewegung automatisch von den Einlaufschlitzen 119 erfasst und im freigestellten Aufnahmeraum 109 an der Zugentlastung 105 verstaut; durch Rastmittel zwischen Mutter 117 und Knickschutz 115 wird der Knickschutz 115 in seiner Position gesichert
   (h) Faser 205 ritzen
      - Keramikmesser vorsichtig durch den Schlitz 162 am Handgerät 130 ziehen; darauf achten, dass die facettierte Seite nach unten schauend in den Schlitz 162 taucht
   (i) Faser 205 brechen
      - durch Drücken des Bolzens 154 gleich unter dem Schlitz 162 die Faser 205 brechen
   (j) Stecker 100 aus Handgerät 130 nehmen
      - durch Drücken des Arretierschiebers 176 wird die Arretierung gelöst, die Schieber 178, 178' fahren aus
(4) Finish
   (a) Steckerstift (Ferrule) 101 markieren
      - Ferrule 101 bis an den Anschlag (wenig Kraft) in einen (gefärbten) Filzadapter drücken (markieren)
   (b) Stecker 100 schleifen
      - mit einem ersten Schleiftuch anschleifen, bis Markierung kaum noch sichtbar ist (die Stirnseite der Ferrule dient dabei als Führung für den Schleifprozess, ohne selbst verändert zu werden)
   (c) Stecker 100 polieren
      - mit einem zweiten Schleiftuch polieren, bis die Stirnseite sauber ist (die Stirnseite der Ferrule dient dabei als Führung für den Polierprozess, ohne selbst verändert zu werden)

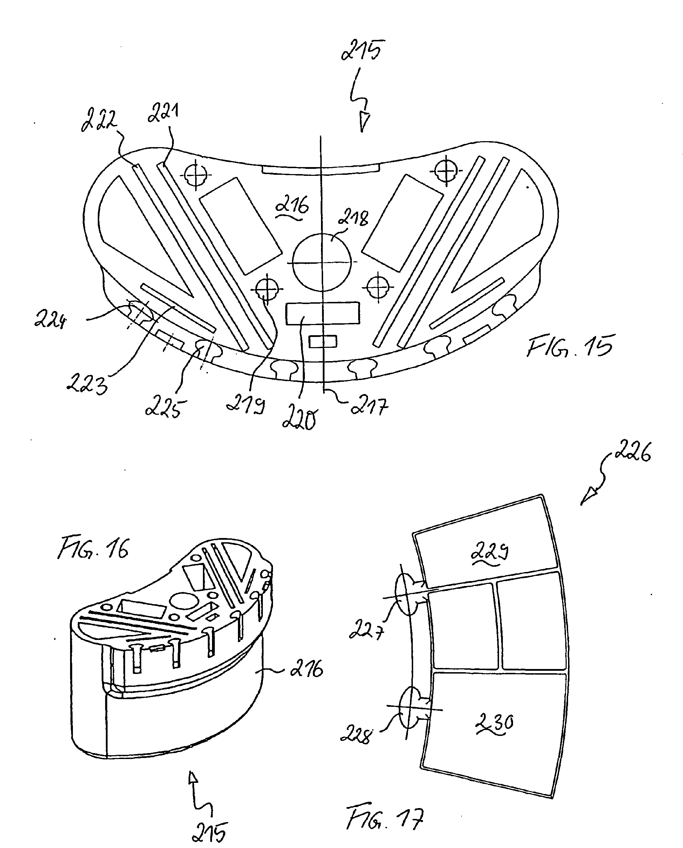

Das beschriebene Verfahren und das zugehörige Handgerät 130 sind für den Feldeinsatz konzipiert. Um hierbei eine optimale Verfügbarkeit und Handhabbarkeit und gleichzeitig sichere Verwahrung aller Gerätschaften und Zubehörteile zu gewährleisten, ist es von Vorteil, eine Werkzeugbox 215 gemäss Fig. 15 und 16 zu verwenden. Die Werkzeugbox 215 besteht aus einem im Querschnitt nierenförmig gebogenen Körper 216 aus Styropor oder dgl., der mittels eines (nicht dargestellten) Tragriemens vor dem Bauch getragen werden kann. In den Körper 216 sind (für Links- und Rechtshänder) symmetrisch zu einer Mittelebene 217 verschiedenartig geformte Ausnehmungen 218,..,223 eingelassen, die der Aufnahme der Gerätschaften dienen. Die zentrale runde Ausnehmung 218 nimmt z.B. das Handgerät 130 auf. In einer weiteren runden Ausnehmung 219 ist der Filzadapter für die Markierung beim Schleif- und Polierprozess untergebracht. Zwei lange schlitzförmige Ausnehmungen 221, 222 nehmen die Schleiftücher auf, während in einer kurzen schlitzförmigen Ausnehmung 223 das Ritzwerkzeug 208 gelagert ist. Die für das Vorbereiten des Lichtwellenleiters 200 notwendige Abisolierzange kann in die rechteckige Ausnehmung 220 gesteckt werden.

Für die Verbrauchsmaterialien wie z.B. die Einzelteile des Steckverbinders ist ein separater, in mehrere Behälterfächer 229, 230 unterteilter Verpackungsbehälter 226 vorgesehen (Fig. 17), der mittels zweier (vertikaler) Halteschienen 227, 228 lösbar und austauschbar in entsprechende Haltenuten 224, 225 an der Vorderseite der Werkzeugbox 215 eingeschoben und dadurch mit der Werkzeugbox 215 unverlierbar verbunden werden kann. Auf diese Weise hat die mit der Konfektionierung betraute Person alle notwendigen Materialien und Gerätschaften jederzeit griffbereit und zugleich sicher verstaut.

Insgesamt ergibt sich mit der Erfindung eine einfache, sichere, schnelle, kostengünstige und im Feld besonders gut einsetzbare Methode der Konfektionierung von optischen Steckverbindern. Alle dazu notwendigen Vorrichtungen und Werkzeuge können in einer Werkzeugbox auf engstem Raum untergebracht werden. Jedes Werkzeug muss nur einmal in die Hand genommen werden und sollte nach den entsprechend durchgeführten Prozessschritten wieder in der Werkzeugbox verstaut werden.

### BEZUGSZEICHENLISTE

- 100: Stecker
- 101: Steckerstift (Ferrule)
- 102: Gehäuse
- 103: Druckfeder
- 104: Innenteil
- 105: Zugentlastung
- 106: Hülse
- 107: Schneidplatte
- 108: Aussengewinde (konisch)
- 109: Aufnahmeraum (ringförmig)
- 110: Verengung (konisch)
- 111: Klemmarm
- 112: Rastarm
- 113: Rastkante
- 114: Bohrung
- 115: Knickschutz
- 116: Hülsenteil
- 117: Mutter
- 118: Innengewinde (konisch)
- 119: Einlaufschlitz
- 120: Klemmarm
- 121: Verengung (konisch)
- 122,123: Flügel
- 124: Knickschutztülle
- 125,126: Rändelung
- 127: Gehäuse (rohrförmig)
- 128: Boden
- 129: Bedienteil (topfförmig)
- 130: Handgerät
- 131,139,148: Druckfeder
- 132: Akkupack
- 133: Batteriehalter
- 134: Kontaktfeder
- 135: Lötfahne
- 136: Stange
- 137,138: Flansch
- 140: Elektronikplatine
- 141: Führung
- 142,145: Hülse
- 143: Bolzen
- 144: Magnet
- 146: Betätigungsknopf
- 147: Rohr
- 149: Lichtleiter
- 150: Kleberpatrone
- 151: Faserbehälter
- 152: Einsatz
- 153: Kontaktbuchse
- 154: Bolzen
- 155,156: Druckfeder
- 157: Hülse
- 158: Körper
- 159: Stift
- 160: Aufnahme
- 161: Hülse
- 162: Schlitz
- 163: Distanzscheibe
- 164: Körper
- 165: Zylinderstift
- 166,169: Führungselement
- 167: Heizelement
- 168: Senkschraube
- 170: Druckstück
- 171: Federplatte
- 172, 172': Kontaktstift
- 173: Adapter
- 174: Unterteil
- 175: Oberteil
- 176: Arretierschieber
- 177,177': Zylinderstift
- 178,178': Schieber
- 179,179': Druckfeder
- 180,180': Führungskulisse
- 181: Rastvertiefung
- 182,183: Druckfeder
- 184,185: Schiene
- 186: Heizdraht
- 187: Hülse
- 188: unbeschichtete Fläche
- 189,190: Ausfräsung
- 191,192: Lötstelle
- 193: Rastrille
- 194: Ansatz (rohrförmig)
- 195: Achse
- 196,..,199,206: Oeffnung
- 200: Lichtwellenleiter
- 201: Mantel
- 202: Verstärkungsfaser (Aramid)
- 203: Ader
- 204: Beschichtung ("coating")
- 205: Faser
- 207: Markierungsring
- 208: Ritzwerkzeug
- 209: Halterung
- 210: Rückteil
- 211: Vorderteil
- 212: Schneide (Keramik)
- 213: Absatz
- 214: Schneidkante (gerundet)
- 215: Werkzeugbox
- 216: Körper (z.B. aus Styropor)
- 217: Mittelebene
- 218,..,223: Ausnehmung
- 224,225: Haltenut
- 226: Verpackungsbehälter
- 227,228: Halteschiene
- 229,230: Behälterfach
- 231: Einführrinne

## Patentansprüche

1. Verfahren zum Konfektionieren eines optischen Steckverbinders, der einen Stecker (100) mit einem Steckerstift (101) umfasst, bei welchem Verfahren die lichtleitende Faser (205) eines Lichtwellenleiters (200) freigelegt, in eine Bohrung (114) im Steckerstift (101) eingeführt und in der Bohrung (114) durch Verkleben mit einem pulverförmigen Reaktionsklebstoff fixiert wird, welcher durch Aufschmelzen in den flüssigen Zustand überführt und im flüssigen Zustand zur Reaktion gebracht wird und zu einer temperaturbeständigen Verbindung vernetzt, und bei welchem Verfahren der Lichtwellenleiter (200)mit der freigelegten lichtleitenden Faser (205) in den pulverförmigen Klebstoff eingetaucht und wieder herausgezogen wird, wobei Partikel des pulverförmigen Klebstoffs an der Oberfläche der Faser (205) haften bleiben, die Faser (205) mit den anhaftenden Partikeln in die Bohrung (114) des Steckerstiftes (101) eingeführt und dort geklemmt wird, und der Steckerstift (101) auf eine Temperatur gebracht und gehalten wird, welche grösser oder gleich der Schmelztemperatur des Klebstoffs ist, wobei die Verklebung der Faser (205) mit dem Steckerstift (101) in einem Handgerät (130) vorgenommen wird, zunächst der Stecker (100) mit dem Steckerstift (101) in eine am Handgerät (130) angebrachte Aufnahme (160) eingeführt und dort gehalten wird, in welcher Aufnahme (160) der Steckerstift (101) von einem elektrischen Heizelement (167) umgeben ist, dass dann der Lichtwellenleiter (200) mit der Faser (205) in den Stecker (100) eingeführt und schliesslich durch Aufheizen des Steckerstiftes (101) mit dem Heizelement (167) die Klebung durchgeführt wird, **dadurch gekennzeichnet, dass** ein batteriebetriebenes Handgerät (130) und ein batteriebetriebenes elektrisches Heizelement (167) verwendet werden, und dass der Lichtwellenleiter (200) nach dem Einführen mit der Faser (205) in den Stecker (100) über im Handgerät (130) angeordnete Betätigungsmittel (129, 136, 137, 141, 143, 151) im Stecker (100) geklemmt wird.

2. Verfahren nach Anspruch 1, **dadurch gekennzeichnet, dass** nach Einführen des Steckers (100) in die Aufnahme (160) und vor dem Einführen des Lichtwellenleiters (200) in den Stecker (100) der Steckerstift(101) mittels des Heizelements (167) auf eine Vorheiztemperatur vorgeheizt wird, und dass nach dem Einführen des Lichtwellenleiters (200) in den Stecker (100) und dem dortigen Fixieren der Steckerstift (101) mittels des Heizelements (167) auf eine Aushärtetemperatur aufgeheizt wird, welche höher ist als die Vorheiztemperatur.

3. Verfahren nach Anspruch 2, **dadurch gekennzeichnet, dass** die Vorheizphase automatisch beendet wird, wenn nicht innerhalb einer vorgegebenen Zeit die Aufheizung auf die Aushärtetemperatur eingeleitet wird.

4. Verfahren nach einem der Ansprüche 1 bis 3, **dadurch gekennzeichnet, dass** nach dem Verkleben der Faser (205) mit dem Steckerstift (101) am hinteren Ende des im Handgerät (130) gehaltenen Steckers (100) ein Knickschutz (115) befestigt wird, welcher vor dem Eintauchen des Lichtwellenleiters (200) in den Klebstoff über den Lichtwellenleiter (200) geschoben worden ist.

5. Verfahren nach Anspruch 4, **dadurch gekennzeichnet, dass** der Knickschutz (115) mittels einer im Knickschutz (115) angeordneten Mutter (117) befestigt wird, welche mit ihrem Innengewinde (118) auf ein entsprechendes Aussengewinde (108) am hinteren Ende des Steckers (100) aufgeschraubt wird.

6. Verfahren nach Anspruch 5, **dadurch gekennzeichnet, dass** Innengewinde (118) und Aussengewinde (108) als konische Rundgewinde ausgebildet sind, dass der Lichtwellenleiter (200) zwischen einem äusseren Mantel (201) und einer innenliegenden Ader (203) eine Vielzahl von in Längsrichtung verlaufenden Verstärkungsfasern (202) aufweist, und dass die Verstärkungsfasern (202) beim Aufschrauben des Knickschutzes (115) zwischen Innengewinde (118) und Aussengewinde (108) eingeklemmt werden.

7. Verfahren nach Anspruch 6, **dadurch gekennzeichnet, dass** der Knickschutz (115) und die Mutter (117) als separate Teile ausgebildet sind, welche durch drehmomentbegrenzende Verbindungsmittel (125,126) miteinander formschlüssig verbunden sind, dass beim Aufschrauben des Knickschutzes (115) auf den Stecker (100) die Mutter (117) solange angezogen wird, bis die Drehmomentbegrenzung einsetzt, und dass dann der Knickschutz (115) über die Mutter (117) nach vorne geschoben und durch Drehen des Knickschutzes (117) aus der Mutter (117) nach vorne heraushängende Verstärkungsfasern (202) in einen ringförmigen Aufnahmeraum (109) zwischen Stecker (100) und Knickschutz (115) eingezogen werden.

8. Verfahren nach einem der Ansprüche 1 bis 7, **dadurch gekennzeichnet, dass** am Handgerät (130) unterhalb der Aufnahme (160) ein Schlitz (162) vorgesehen ist, durch welchen die Faser (205) des Lichtwellenleiters (200), die nach dem Verkleben aus der Bohrung (114) im Steckerstift (101) hervorsteht, von aussen zugänglich ist, und dass nach dem Verkleben die hervorstehende Faser durch Einführen eines Ritzwerkzeuges (208) in den Schlitz (162) in unmittelbarer Nähe des Steckerstiftes (101) angeritzt und anschliessend gebrochen wird.

9. Verfahren nach Anspruch 8, **dadurch gekennzeichnet, dass** ein Ritzwerkzeug (208) verwendet wird, bei welchem eine mit einer Schneidkante (214) versehene Schneide (212) in vertikaler Richtung frei verschiebbar in einer Halterung (209) gelagert ist, und dass das Ritzwerkzeug (208) mit der Halterung (209) quer zur. Faser- (205) derart geführt durch den Schlitz. (162) gezogen wird, dass die Schneide (212) vermittels ihres Eigengewichtes mit der Schneidkante (214) auf die zu ritzende Faser (205) drückt.

10. Verfahren nach einem der Ansprüche 8 und 9, **dadurch gekennzeichnet, dass** zum Brechen der angeritzten Faser unterhalb des Schlitzes (162) im Handgerät (130) angeordnete Mittel (154,...,157) in Querrichtung gegen die hervorstehende Faser gedrückt werden.

11. Verfahren nach einem der Ansprüche 8 bis 10, **dadurch gekennzeichnet, dass** der abgebrochene Abschnitt der Faser in einem im Handgerät (130) unterhalb des Schlitzes (162) angeordneten Faserbehälter (151) aufgefangen und gesammelt wird.

12. Verfahren nach einem der Ansprüche 8 bis 11, **dadurch gekennzeichnet, dass** nach dem Brechen der angeritzten Faser (205) in einem Schleifprozess und einem nachfolgenden Polierprozess das aus dem Steckerstift (101) herausragende Ende der Faser (205) abgeschliffen und deren Stirnseite poliert wird, wobei zur Führung die Stirnseite des Steckerstiftes (101) selbst verwendet wird.

13. Verfahren nach einem der Ansprüche 1 bis 12, **dadurch gekennzeichnet, dass** am Handgerät (130) eine Kleberpatrone (150) mit dem pulverförmigen Reaktionskleber angeordnet ist, welcher von oben durch eine Öffnung zugänglich ist, die mit einer drehbaren Hülse (161) verschliessbar ist, und dass zum Eintauchen der freigelegten Faser (205) in den Klebstoff die Hülse (161) in die Öffnungsstellung verdreht und nach dem Herausziehen der Faser (205) in die Verschlussstellung zurückgedreht wird.

14. Vorrichtung zur Durchführung des Verfahrens nach einem der Ansprüche 1 bis 13, welche Vorrichtung als Handgerät (130) ausgebildet ist, wobei das Handgerät (130) am oberen Ende eine Aufnahme (160) mit einem Heizelement (167) aufweist, welches Heizelement (167) den Steckerstift (101) eines in das Handgerät (130) von oben eingeführten Steckers (100) konzentrisch umschliesst, und wobei oberhalb der Aufnahme (160) ein Adapter (173) angeordnet ist, welcher den in das Handgerät (130) eingeführten Stecker (101) lösbar hält und fixiert, **dadurch gekennzeichnet, dass** unterhalb der Aufnahme (160) Betätigungsmittel (129, 136, 137, 141, 143, 151) zur Klemmung des Lichtwellenleiters (200) angeordnet sind, mit welchen der Steckerstift (101) relativ zum fixierten Stecker (100) in axialer Richtung verschoben werden kann, dass im Handgerät (130) Mittel (132) zum Speichern elektrischer Energie untergebracht sind, welche mit dem Heizelement (167) verbunden werden können, und dass Steuerungsmittel (140,146) zur Steuerung des Aufheizvorgangs vorgesehen sind.

15. Vorrichtung nach Anspruch 14, **dadurch gekennzeichnet, dass** die Aufnahme (160) auf das Handgerät (130) aufsteckbar ist, wobei für den elektrischen Anschluss des Heizelementes (167) entsprechende Kontaktbuchsen (153) und Kontaktstifte (172, 172') vorgesehen sind und zwischen der Aufnahme (160) und dem Handgerät (130) ein Schlitz (162) frei bleibt, über den der im Heizelement (167) steckende Steckerstift (101) von aussen zugänglich ist.

16. Vorrichtung nach einem der Ansprüche 14 und 15, **dadurch gekennzeichnet, dass** das Heizelement (167) eine auf eine Hülse (187) gewickelte zylindrische Spule aus einem Heizdraht (186) umfasst, und dass die Hülse (187) mit dem Heizdraht (186) im Zentrum einer Federplatte (171) in Richtung der Steckerachse des eingeführten Steckers (100) auslenkbar angeordnet ist.

17. Vorrichtung nach Anspruch 16, **dadurch gekennzeichnet, dass** die Federplatte (171) als Leiterplatte ausgebildet ist und zum Anschluss des Heizdrahtes (186) dient, und dass die Federeigenschaften der Federplatte (171) durch zwei spiralförmig ineinandergreifende, konzentrische Ausfräsungen (189, 190) in der Leiterplatte erzeugt werden.

18. Vorrichtung nach einem der Ansprüche 14 bis 17, **dadurch gekennzeichnet, dass** der Adapter (173) lösbar mit der Aufnahme (160) verbunden ist.

19. Vorrichtung nach einem der Ansprüche 14 bis 18, **dadurch gekennzeichnet, dass** der Adapter (173) zwei Schieber (178, 178') umfasst, welche einander gegenüberliegend quer zur Steckerachse des eingeführten Steckers (100) verschiebbar sind, dass der eingeführte Stecker (100) zwischen den beiden Schiebern (178, 178') klemmend gehalten werden kann, und dass die beiden Schieber (178, 178') mittels eines dazu quer verschiebbaren Arretierschiebers (176) in der klemmenden Stellung arretiert werden können.

20. Vorrichtung nach einem der Ansprüche 14 bis 19, **dadurch gekennzeichnet, dass** die Betätigungsmittel einen in einer Führung (141) verschiebbar gelagerten Bolzen (143) umfassen, welcher über ein in der Führung (141) geführtes Zwischenelement (151) auf den Steckerstift (101) des in die Aufnahme (160) eingeführten Steckers (100) einwirkt.

21. Vorrichtung nach Anspruch 20, **dadurch gekennzeichnet, dass** das Zwischenelement als Faserbehälter (151) zum Auffangen der nach dem Verkleben abgebrochenen Faserabschnitte ausgebildet ist, und dass der Faserbehälter (151) mit dem Bolzen (143), insbesondere über einen eingebauten Magneten (144), lösbar verbunden ist und zum Entleeren aus der Führung (141) herausnehmbar ist.

22. Vorrichtung nach einem der Ansprüche 20 und 21, **dadurch gekennzeichnet, dass** das Handgerät (130) ein rohrförmiges Gehäuse (127) umfasst, welches am oberen Ende durch einen scheibenförmigen Körper (158) abgeschlossen ist, dass im unteren Teil des Gehäuses (127) ein Akkupack (132) untergebracht ist, dass die Führung (141) für den Bolzen (143) und das Zwischenelement bzw. den Faserbehälter (151) zwischen dem Akkupack (132) und dem Körper (158) angeordnet ist, und dass der Bolzen (143) über ein topfförmiges Bedienteil (129) betätigt wird, welches gegen den Druck einer Druckfeder (131) verschiebbar über das untere Ende des Gehäuses (127) gestülpt ist und über mechanische Verbindungsmittel (136, 137, 139) am Akkupack (132) vorbei mit dem Bolzen (143) in Wirkverbindung steht.

23. Vorrichtung nach Anspruch 22, **dadurch gekennzeichnet, dass** im Gehäuse (127) zwischen dem Akkupack (132) und dem scheibenförmigen Körper (158) um den Bolzen (143) herum Mittel (140, 146, 149) zur elektronischen Steuerung des Aufheizvorgangs angeordnet sind.

24. Vorrichtung nach einem der Ansprüche 14 bis 23, **dadurch gekennzeichnet, dass** am Handgerät (130) Mittel (147, 148, 159, 161) zur Aufnahme und verschliessbaren Aufbewahrung einer mit dem Klebstoff gefüllten Kleberpatrone (150) vorgesehen sind.

25. Vorrichtung nach einem der Ansprüche 14 bis 24, **dadurch gekennzeichnet, dass** zur Aufbewahrung und Bereithaltung des Handgerätes (130) und der zugehörigen Werkzeuge (208) eine tragbare Werkzeugbox (215) vorgesehen ist.

26. Vorrichtung nach Anspruch 25, **dadurch gekennzeichnet, dass** an der Werkzeugbox (215) Verpackungsbehälter (226)mit Verbrauchsteilen, wie z. B. Einzelteilen von Steckverbindern, lösbar befestigt werden können.

27. Steckverbinder für den Einsatz bei einem Verfahren nach einem der Ansprüche1 bis 13, welcher Steckverbinder einen Stecker (100) mit einem Steckerstift (101) zur Aufnahme und Verklebung des vorderen Endes der Faser (205) des Lichtwellenleiters (200) umfasst, **dadurch gekennzeichnet, dass** im Stecker (100) Mittel (104, 106, 110, 112, 113) zur Klemmung der Ader (203) des Lichtwellenleiters (200) vorgesehen sind, welche Klemmmittel (104, 106, 110, 112, 113) durch axiales Einschieben des Steckerstiftes (101) in den Stecker (100) hinein betätigbar sind.

28. Steckverbinder nach Anspruch 27, **dadurch gekennzeichnet, dass** die Klemmmittel ein sich in axialer Richtung erstreckendes, mit einer Durchgangsbohrung zur Durchführung des Lichtwellenleiters (200) ausgestattetes Innenteil (104) umfassen, in welches am einen Ende der Steckerstift (101) eingesetzt ist, und welches am anderen Ende in mehreren Klemmarmen (111) ausläuft, welche die Ader (203) eines durchgeführten Lichtwellenleiters (200) ringförmig umgeben, dass sich das Innenteil (104) mit den Klemmarmen (111) in eine konzentrisch angeordnete Hülse (106) hinein erstreckt, und dass die Hülse (106) eine konische Verengung (110) aufweist, in welcher die Klemmarme (111) klemmend zusammengepresst werden, wenn das Innenteil (104) weiter in die Hülse (106) hineingeschoben wird.

29. Steckverbinder nach Anspruch 28, **dadurch gekennzeichnet, dass** am Innenteil (104) und an der Hülse (106) Rastmittel (112, 113) vorgesehen sind, welche die beiden Teile miteinander verrasten, wenn das Innenteil (104) zum Klemmen einer Ader (203) in die Hülse (106) hineingeschoben wird.

30. Steckverbinder nach einem der Ansprüche 27 bis 29, **dadurch gekennzeichnet, dass** ein Knickschutz (115) vorgesehen ist, welcher am hinteren Ende des Steckers (100) anbringbar ist, dass der Stecker (110) zum Anbringen des Knickschutzes (115) am hinteren Ende ein konisches Aussengewinde (108) aufweist, und dass eine Mutter(117) mit einem entsprechenden konischen Innengewinde (118) vorgesehen ist, welche mit dem Knickschutz (115) auf das Aussengewinde (108) aufschraubbar ist und den Knickschutz (115) am Stecker (100) hält.

31. Steckverbinder nach Anspruch 30, **dadurch gekennzeichnet, dass** Aussengewinde (108) und Innengewinde (118) als Rundgewinde ausgebildet sind, und dass am Aussengewinde (108) Mittel, insbesondere in Form einer tangential orientierten Schneidplatte (107), angeordnet sind, welche ein Rückdrehen der Mutter (117) auf dem Aussengewinde (108) verhindern.

32. Steckverbinder nach einem der Ansprüche 30 und 31, **dadurch gekennzeichnet, dass** die Mutter (117) lösbar in einem am Knickschutz (115) angeformten Hülsenteil (116) angeordnet ist, und dass zur formschlüssigen Verbindung mit Drehmomentbegrenzung zwischen Mutter (117) und Knickschutz (115) am äusseren Umfang der Mutter (117) und am inneren Umfang des Hülsenteils (116) jeweils eine Rändelung (126 bzw. 125) vorgesehen ist, welche Rändelungen (125, 126) miteinander in Eingriff stehen.

33. Steckverbinder nach einem der Ansprüche 30 bis 32, **dadurch gekennzeichnet, dass** am Stecker (100) in Steckrichtung hinter dem Aussengewinde (108) ein ringförmiger Aufnahmeraum (109) vorgesehen ist, dass der Knickschutz (115) relativ zur Mutter (117) soweit in axialer Richtung verschiebbar ist, dass das Hülsenteil (116) den Aufnahmeraum (109) überdeckt, und dass am vorderen Ende des Hülsenteils (116) Einlaufschlitze (119) angebracht sind, welche beim Drehen des Knickschutzes (115) aus der Mutter (117) heraushängende Verstärkungsfasern (202) des Lichtwellenleiters (200) ergreift und in den Aufnahmeraum (109) eindreht.

34. Steckverbinder nach einem der Ansprüche 30 bis 33, **dadurch gekennzeichnet, dass** am Stecker (100) in Steckrichtung vor dem Aussengewinde (108) einröhrförmiger Ansatz (194) zum Einschieben der Ader (203) und zum Drüberschieben des Mantels (201) vorgesehen ist, und dass am offenen Ende des Ansatzes (194) eine Einführhilfe, insbesondere in Form einer Einführrinne (231), angeordnet ist.

35. Steckverbinder nach einem der Ansprüche 30 bis 34, **dadurch gekennzeichnet, dass** der Knickschutz (115) eine sich nach aussen hin konisch verjüngende Knickschutztülle (124) aufweist, und dass an der Knickschutztülle (124) eine Markierung, insbesondere in Form eines im Durchmesser abweichenden Markierungsringes (207), vorgesehen ist, bis zu der die Knickschutztülle (124) verkürzt werden muss, wenn ein mit einem Mantel (201) versehener Lichtwellenleiter (200) konfektioniert werden soll.

36. Steckverbinder nach einem der Ansprüche 30 bis 32, **dadurch gekennzeichnet, dass** am Knickschutz (115) zur Erhöhung der aufbringbaren Drehkraft auf der Aussenseite einander gegenüberliegend zwei Flügel (122, 123) angeformt, die nach dem Aufschrauben des Knickschutzes (115) durch Abbrechen an einer direkt am Knickschutz (115) angeordneten Sollbruchstelle entfernt werden können.

## Claims

1. A method for making up an optical plug-in connector, which comprises a connector (100) with a connector pin (101), in which method the light-guiding fiber (205) of an optical waveguide (200) is exposed, inserted into a bore (114) in the connector pin (101) and fixed in the bore (114) by adhesive bonding with a powdered reaction adhesive, which is transformed into the liquid state by melting and, in the liquid state, is made to react and crosslinks to form a temperature-resistant bond, and in which method the optical waveguide (200) with the exposed light-guiding fiber (205) is dipped in the powdered adhesive and pulled out again, particles of the powdered adhesive remaining adhering to the surface of the fiber (205), the fiber (205) with the adhering particles is inserted into the bore (114) of the connector pin (101) and fixed there, and the connector pin (101) is brought to and held at a temperature which is greater than or equal to the melting temperature of the adhesive, **characterized in that** the adhesive bonding of the fiber (205) to the connector pin (101) is performed in a battery-operated hand-held device (130), **in that** firstly the connector (100) is inserted with the connector pin (101) into a receptacle (160) attached to the hand-held device (130) and is held there, in which receptacle (160) the connector pin (101) is surrounded by a battery-operated electrical heating element (167), **in that** the optical waveguide (200) is then inserted with the fiber (205) into the connector (100) and fixed in the connector (100) by means of actuating means (129, 136, 137, 141, 143, 151) arranged in the hand-held device (130), and **in that** finally the adhesive bonding is carried out by heating up the connector pin (101) with the heating element (167).

2. The method as claimed in claim 1, **characterized in that**, after insertion of the connector (100) into the receptacle (160) and before insertion of the optical waveguide (200) into the connector (100), the connector pin (101) is pre-heated by means of the heating element (167) to a pre-heating temperature, and **in that**, after the insertion of the optical waveguide (200) into the connector (100) and fixing there, the connector pin (101) is heated by means of the heating element (167) up to a curing temperature, which is higher than the pre-heating temperature.

3. The method as claimed in claim 2, **characterized in that** the pre-heating phase is automatically ended if the heating-up to the curing temperature is not initiated within a predetermined time.

4. The method as claimed in one of claims 1 to 3, **characterized in that**, after the adhesive bonding of the fiber (205) to the connector pin (101), a buckling preventer (115) which has been pushed over the optical waveguide (200) before the optical waveguide (200) is dipped into the adhesive is fastened at the rear end of the connector (100) held in the hand-held device (130).

5. The method as claimed in claim 4, **characterized in that** the buckling preventer (115) is fastened by means of a nut (117) which is arranged in the buckling preventer (115) and is screwed with its internal thread (118) onto a corresponding external thread (108) at the rear end of the connector (100) .

6. The method as claimed in claim 5, **characterized in that** the internal thread (118) and external thread (108) are formed as conical round threads, **in that** the optical waveguide (200) has between an outer cladding (201) and an inner buffered fiber (203) a multiplicity of reinforcing fibers (202) running in the longitudinal direction, and **in that** the reinforcing fibers (202) are clamped in between the internal thread (118) and external thread (108) when the buckling preventer (115) is screwed on.

7. The method as claimed in claim 6, **characterized in that** the buckling preventer (115) and the nut (117) are formed as separate parts which are positively connected to each other by torque-limiting connecting means (125, 126), **in that**, when the buckling preventer (115) is screwed onto the connector (100), the nut (117) is tightened until the torque limitation commences, and **in that**, then, the buckling preventer (115) is pushed forward over the nut (117) and reinforcing fibers (202) hanging out to the front from the nut (117) are drawn into an annular receiving space (109) between the connector (100) and the buckling preventer (115) by turning the buckling preventer (115).

8. The method as claimed in one of claims 1 to 7, **characterized in that**, provided on the hand-held device (130) under the receptacle (160) is a slot (162) through which the fiber (205) of the optical waveguide (200) which protrudes from the bore (114) in the connector pin (101) after the adhesive bonding is accessible from the outside, and **in that**, after the adhesive bonding, the protruding fiber is scored by inserting a scoring tool (208) into the slot (162) in the direct vicinity of the connector pin (101) and is subsequently broken.

9. The method as claimed in claim 8, **characterized in that** a scoring tool (208) is used, in which a cutting blade (212) provided with a cutting edge (214) is mounted such that it is freely displaceable in the vertical direction in a mount (209), and **in that** the scoring tool (208) is drawn with the mount (209) transversely in relation to the fiber (205) in a guided manner through the slot (162) in such a way that the cutting blade (212) presses by means of its own weight with the cutting edge (214) on the fiber (205) to be scored.

10. The method as claimed in either of claims 8 and 9, **characterized in that**, for breaking the scored fiber, means (154,...,157) arranged underneath the slot (162) in the hand-held device (130) are pressed in the transverse direction against the protruding fiber.

11. The method as claimed in one of claims 8 to 10, **characterized in that** the broken-off portion of the fiber is caught and collected in a fiber container (151) arranged in the hand-held device (130) underneath the slot (162).

12. The method as claimed in one of claims 8 to 11, **characterized in that**, after the breaking of the scored fiber (205), the end of the fiber (205) protruding from the connector pin (101) is rubbed off and its end face polished in a rubbing-down process and subsequent polishing process, the end face of the connector pin (101) itself being used for guidance.

13. The method as claimed in one of claims 1 to 12, **characterized in that** an adhesive cartridge (150) with the powdered reaction adhesive, which is accessible from above through an opening and can be closed by a rotatable sleeve (161), is arranged on the hand-held device (130), and **in that** the sleeve (161) is turned into the opening position for the dipping of the exposed fiber (205) into the adhesive and is turned back into the closed position after the drawing out of the fiber (205).

14. A device for carrying out the method as claimed in one of claims 1 to 13, **characterized in that** the device is formed as a hand-held device (130), **in that** the hand-held device (130) has at the upper end a receptacle (160) with a heating element (167), which heating element (167) concentrically encloses the connector pin (101) of a connector (100) inserted into the hand-held device (130) from above, **in that** arranged above the receptacle (160) is an adaptor (173), which releasably holds and fixes the connector (101) inserted into the hand-held device (130), **in that** arranged underneath the receptacle (160) are actuating means (129, 136, 137, 141, 143, 151), with which the connector pin (101) can be displaced in the axial direction in relation to the fixed connector (101), **in that** accommodated in the hand-held device (130) are means (132) for storing electrical energy, which can be connected to the heating element (167), and **in that** control means (140, 146) for controlling the heating-up operation are provided.

15. The device as claimed in claim 14, **characterized in that** the receptacle (160) can be fitted onto the hand-held device (130), with appropriate contact sockets (153) and contact pins (172, 172') being provided for the electrical connection of the heating element (167) and a slot (162) remaining free between the receptacle (160) and the hand-held device (130) for providing access from the outside to the connector pin (101) inserted in the heating element (167).

16. The device as claimed in either of claims 14 and 15, **characterized in that** the heating element (167) comprises a cylindrical coil of a heating wire (186) wound onto a sleeve (187), and **in that** the sleeve (187) with the heating wire (186) is arranged in the center of a spring plate (171) in such a way that it can be deflected in the direction of the connector axis of the inserted connector (100).

17. The device as claimed in claim 16, **characterized in that** the spring plate (171) is formed as a printed circuit board and serves for the connection of the heating wire (186), and **in that** the spring properties of the spring plate (171) are produced by two concentric milled recesses (189, 190) in the printed circuit board, engaging spirally in each other.

18. The device as claimed in one of claims 14 to 17, **characterized in that** the adaptor (173) is releasably connected to the receptacle (160).

19. The device as claimed in one of claims 14 to 18, **characterized in that** the adaptor (173) comprises two slides (178, 178'), which, lying opposite each other, are displaceable transversely in relation to the connector axis of the inserted connector (100), **in that** the inserted connector (100) can be held in a clamping manner between the two slides (178, 178'), and **in that** the two slides (178, 178') can be arrested in the clamping position by means of an arresting slide (176) which can be displaced transversely in relation to them.

20. The device as claimed in one of claims 14 to 19, **characterized in that** the actuating means comprise a bolt (143) which is displaceably mounted in a guide (141) and acts via an intermediate element (151) guided in the guide (141) on the connector pin (101) of the connector (100) inserted into the receptacle (160).

21. The device as claimed in claim 20, **characterized in that** the intermediate element is formed as a fiber container (151) for catching the fiber portions broken off after the adhesive bonding, and **in that** the fiber container (151) is releasably connected to the bolt (143), in particular by means of a built-in magnet (144), and can be removed from the guide (141) for emptying.

22. The device as claimed in either of claims 20 and 21, **characterized in that** the hand-held device (130) comprises a tubular housing (127), which is closed off at the upper end by a disk-shaped body (158), **in that** a rechargeable battery pack (132) is accommodated in the lower part of the housing (127), **in that** the guide (141) for the bolt (143) and the intermediate element or the fiber container (151) is arranged between the rechargeable battery pack (132) and the body (158), and **in that** the bolt (143) is actuated by means of a cup-shaped operating part (129), which has been slipped displaceably over the lower end of the housing (127) against the pressure of a compression spring (131) and is in operative connection with the bolt (143) past the rechargeable battery pack (132) by mechanical connecting means (136, 137, 139).

23. Device as claimed in claim 22, **characterized in that**, in the housing (127), means (140, 146, 149) for the electronic control of the heating-up operation are arranged between the rechargeable battery pack (132) and the disk-shaped body (158), around the bolt (143).

24. The device as claimed in one of claims 14 to 23, **characterized in that** means (147, 148, 159, 161) for receiving and safely storing an adhesive cartridge (150) filled with the adhesive are provided on the hand-held device (130).

25. The device as claimed in one of claims 14 to 24, **characterized in that** a tool box (215) which can be worn is provided for storing and keeping ready the hand-held device (130) and the associated tools (208).

26. The device as claimed in claim 25, **characterized in that** packaging containers (226) with consumable parts, such as for example individual parts of plug-in connectors, are releasably attached to the tool box (215) .

27. A plug-in connector for use in the case of a method as claimed in one of claims 1 to 13, **characterized in that** which plug-in connector comprises a connector (100) with a connector pin (101) for receiving and adhesive bonding the forward end of the fiber (205) of the optical waveguide (200), **characterized in that** means (104, 106, 110, 112, 113) for fixing the buffered fiber (203) of the optical waveguide (200) are provided in the connector (100), which fixing means (104, 106, 110, 112, 113) can be actuated by axially pushing the connector pin (101) into the connector (100).

28. The plug-in connector as claimed in claim 27, **characterized in that** the fixing means comprise an inner part (104) which extends in the axial direction, is provided with a through-bore for leading through the optical waveguide (200) and into which the connector pin (101) is inserted at one end, and which runs out at the other end into a number of clamping arms (111), which surround the buffer fiber (203) of a led-through optical waveguide (200) in an annular manner, **in that** the inner part (104) extends with the clamping arms (111) into a concentrically arranged sleeve (106), and **in that** the sleeve (106) has a conical narrowing (110), in which the clamping arms (111) are pressed together in a clamping manner when the inner part (104) is pushed further into the sleeve (106).

29. The plug-in connector as claimed in claim 28, **characterized in that** latching means (112, 113) which latch the two parts to each other when the inner part (104) is pushed into the sleeve (106) for the clamping of a buffered fiber (203) are provided on the inner part (104) and on the sleeve (106).

30. The plug-in connector as claimed in one of claims 27 to 29, **characterized in that** a buckling preventer (115) which can be attached to the rear end of the connector (100) is provided, **in that** the connector (110) has a conical external thread (108) for the attachment of the buckling preventer (115) to the rear end, and **in that** a nut (117) which has a corresponding conical internal thread (118), can be screwed with the buckling preventer (115) onto the external thread (108) and holds the buckling preventer (115) on the connector (100) is provided.

31. The plug-in connector as claimed in claim 30, **characterized in that** the external thread (108) and internal thread (118) are formed as round threads, and **in that** means, in particular in the form of a tangentially oriented cutting plate (107), which prevent the nut (117) from turning back on the external thread (108) are arranged on the external thread (108) .

32. The plug-in connector as claimed in either of claims 30 and 31, **characterized in that** the nut (117) is arranged releasably in a sleeve part (116) formed onto the buckling preventer (115), and **in that**, for positive connection with torque limitation between the nut (117) and the buckling preventer (115), a knurling (126 and 125) is respectively provided on the outer circumference of the nut (117) and on the inner circumference of the sleeve part (116), which knurlings (125, 126) are in engagement with each other.

33. The plug-in connector as claimed in one of claims 30 to 32, **characterized in that** an annular receiving space (109) is provided on the connector (100), behind the external thread (108) in the plugging direction, **in that** the buckling preventer (115) is displaceable in the axial direction in relation to the nut (117) to the extent that the sleeve part (116) covers over the receiving space (109), and **in that** run-in slots (119) which seizes reinforcing fibers (202) of the optical waveguide (200) protruding out of the nut (117) and turns them into the receiving space (109) when the buckling preventer (115) is turned are attached to the front end of the sleeve part (116).

34. The plug-in connector as claimed in one of claims 30 to 33, **characterized in that** a tubular attachment (194) for pushing in the buffered fiber (203) and for pushing the cladding (201) over it is provided on the connector (100), in front of the external thread (108) in the plugging direction, and **in that** an insertion aid, in particular in the form of an insertion groove (231), is arranged at the open end of the attachment (194).

35. The plug-in connector as claimed in one of claims 30 to 34, **characterized in that** the buckling preventer (115) has an outwardly conically tapering buckling preventer grommet (124), and **in that** a marking, in particular in the form of a marking ring (207) of a differing diameter, up to which the buckling preventer grommet (124) must be shortened if an optical waveguide (200) provided with a cladding (201) is to be made up, is provided on the buckling preventer grommet (124).

36. The plug-in connector as claimed in one of claims 30 to 32, **characterized in that**, to increase the turning force which can be applied, two wings (122, 123) are formed on the outer side of the buckling preventer (115), lying opposite each other, and can be removed after the screwing-on of the buckling preventer (115) by breaking off at a predetermined breaking point arranged directly on the buckling preventer (115).

## Revendications

1. Procédé pour fabriquer un connecteur à fiches optique, comprenant une fiche mâle (100) avec une pointe de contact (101), procédé dans lequel on libère la fibre optique (205) d'un guide d'ondes optiques (200), on l'insère dans un perçage (114) dans la pointe de contact (101) et on la fixe dans le perçage (114) par collage avec une colle réactive pulvérulente, que l'on amène par fusion dans l'état liquide, que l'on amène à réagir dans l'état liquide et que l'on réticule en un composé à constance thermique, et procédé dans lequel on immerge le guide d'ondes optiques (200) avec la fibre optique (205) libérée dans la colle pulvérulente et on l'en retire, des particules de la colle pulvérulente adhérant sur la surface de la fibre (205), on introduit la fibre (205) avec les particules adhérentes dans le perçage (114) de la pointe de contact (101) et on l'y serre, et on amène et on maintient la pointe de contact (101) à une température qui est supérieure ou égale à la température de fusion de la colle, le collage de la fibre (205) avec la pointe de contact (101) étant réalisé dans un appareil manuel (130), on introduit d'abord la fiche mâle (100) avec la pointe de contact (101) dans un logement (160) monté sur l'appareil manuel (130) et on l'y maintient, logement (160) dans lequel la pointe de contact (101) est entourée par un élément chauffant électrique (167), on introduit ensuite le guide d'ondes optiques (200) avec la fibre (205) dans la fiche mâle (100) et, enfin, on procède au collage par chauffage de la pointe de contact (101) avec l'élément chauffant (167), **caractérisé en ce qu'**on utilise un appareil manuel (130) fonctionnant à batterie et un élément électrique chauffant (167) fonctionnant à batterie, et **en ce que**, après l'avoir introduit, avec la fibre (205) dans la fiche mâle (100), on serre le guide d'ondes optiques (200) dans la fiche mâle (100), à l'aide de moyens d'actionnement (129, 136, 137, 141, 143, 151) disposés dans l'appareil manuel (130).

2. Procédé selon la revendication 1, **caractérisé en ce que**, après l'introduction de la fiche mâle (100) dans le logement (160) et avant l'introduction du guide d'ondes optiques (200) dans la fiche mâle (100) on préchauffe la pointe de contact (101) au moyen de l'élément chauffant (167), à une température de préchauffage, et **en ce que**, après l'introduction du guide d'ondes optiques (200) dans la fiche mâle (100) et la fixation de la pointe de contact (101) à cet endroit, on procède au moyen de l'élément chauffant (167) à un échauffement à une température de durcissement, qui est supérieure à la température de préchauffage.

3. Procédé selon la revendication 2, **caractérisé en ce que** la phase de préchauffage se termine automatiquement, si dans une période prédéfinie, l'échauffement à la température de durcissement n'est pas engagé.

4. Procédé selon l'une quelconque des revendications 1 à 3, **caractérisé en ce que**, après le collage de la fibre (205) avec la pointe de contact (101), on fixe sur l'extrémité arrière de la fiche mâle (100) maintenue dans l'appareil manuel (130) un dispositif anticoque (115), que l'on a poussé par dessus le guide d'ondes optiques (200), avant l'immersion du guide d'ondes optiques (200) dans la colle.

5. Procédé selon la revendication 4, **caractérisé en ce qu'**on fixe le dispositif anticoque (115) au moyen d'un écrou (117) disposé dans le dispositif anticoque (115), que l'on visse par son taraudage (118) sur un filetage (108) correspondant sur l'extrémité arrière de la fiche mâle (100).

6. Procédé selon la revendication 5, **caractérisé en que** le taraudage (118) et le filetage (108) sont conçus sous la forme de filets ronds coniques, en ce que le guide d'ondes optiques (200) comporte entre une enveloppe extérieure (201) et un brin interne (203) une pluralité de fibres de renfort (202) s'étendant en direction longitudinale, et en ce que, lors du vissage du dispositif anticoque (115), les fibres de renfort (202) sont serrées entre le taraudage (118) et le filetage (108).

7. Procédé selon la revendication 6, **caractérisé en ce que** le dispositif anticoque (115) et l'écrou (117) sont conçus sous la forme d'éléments séparés, qui sont reliés entre eux par complémentarité de forme par des moyens de liaison (125, 126) à couple de rotation limité, **en ce que** lors du vissage du dispositif anticoque (115) sur la fiche mâle (100), on serre l'écrou (117) jusqu'à ce que la limitation du couple de rotation soit déclenchée et **en ce que** l'on pousse ensuite le dispositif anticoque (115) pardessus l'écrou (117) vers l'avant, et par rotation du dispositif anticoque (115) hors de l'écrou (117), des fibres de renfort (202) dépassant par l'avant sont tirées dans un espace de logement (109) annulaire, entre la fiche mâle (100) et le dispositif anticoque (115).

8. Procédé selon l'une des revendications 1 à 7, **caractérisé en ce que**, sur l'appareil manuel (130), sous le logement (160) est prévue une échancrure (162) à travers laquelle la fibre (205) du guide d'ondes optiques (200), qui après le collage déborde du perçage (114) dans la pointe de contact (101) est accessible par l'extérieur et **en ce que**, après le collage, on incise et on brise ensuite la fibre débordante, par introduction d'un outil d'incision (208) dans l'échancrure (162), à proximité directe de la pointe de contact (101).

9. Procédé selon la revendication 8, **caractérisé en ce qu'**on utilise un outil d'incision (208) sur lequel une lame (212) munie d'une arête centrale (214) est logée de façon librement déplaçable en direction verticale dans une fixation (209) et **en ce que** l'on tire l'outil d'incision (208) de façon guidée avec la fixation (209) à travers l'échancrure (162) à la transversale de la fibre (205), de sorte que la lame (212) appuie par son propre poids avec l'arête centrale (214) sur la fibre (205) à inciser.

10. Procédé selon l'une quelconque des revendications 8 et 9, **caractérisé en ce que**, pour briser la fibre incisée, en dessous de l'échancrure (162), on presse des moyens (154, ..., 157) disposés dans l'appareil manuel (130) en direction transversale contre la fibre débordante.

11. Procédé selon l'une quelconque des revendications 8 à 10, **caractérisé en ce que** la section brisée de la fibre est réceptionnée et collectée dans un récipient à fibres (151) disposé dans l'appareil manuel (130), en dessous de l'échancrure (162).

12. Procédé selon l'une quelconque des revendications 8 à 11, **caractérisé en ce que**, après que la fibre (205) incisée est brisée, dans un processus de rectification et un processus de polissage consécutif, l'extrémité de la fibre (205) saillant hors de la pointe de contact (101) est rectifiée et sa face frontale est polie, la face frontale de la pointe de contact (101) étant utilisée elle même pour le guidage.

13. Procédé selon l'une quelconque des revendications 1 à 12, **caractérisé en ce que**, sur l'appareil manuel (130), est disposée une cartouche de colle (150), avec la colle réactive pulvérulente, qui est accessible par le haut, à travers un orifice, qui est susceptible d'être fermé par une douille (161) rotative, et **en ce que** pour l'immersion de la fibre (205) libérée dans la colle, on fait tourner la douille (161) dans la position d'ouverture et après le retrait de la fibre (205), on la fait retourner dans la position de fermeture.

14. Dispositif pour réaliser le procédé selon l'une quelconque des revendications 1 à 13, lequel dispositif est conçu sous la forme d'un appareil manuel (130), l'appareil manuel (130) comportant sur l'extrémité supérieure un logement (160) avec un élément chauffant (167), lequel élément chauffant (167) entoure de façon concentrique la pointe de contact (101) d'une fiche mâle (100) introduite par le dessus dans l'appareil manuel (130), un adaptateur (173) étant disposé au-dessus du logement (160), adaptateur qui maintient et qui fixe de façon amovible la fiche mâle (100) introduite dans l'appareil manuel (130), **caractérisé en ce que**, en dessous du logement (160) sont disposés des moyens d'actionnement (129, 136, 137, 141, 143, 151) pour le serrage du guide d'ondes optiques (200), à l'aide desquels la pointe de contact (101) peut être déplacée en direction axiale par rapport à la fiche mâle (100) fixée, **en ce que** dans l'appareil manuel (130) sont logés des moyens (132) d'accumulation d'énergie électrique, qui peuvent être reliés avec l'élément chauffant (167) et **en ce que** des moyens de commande (140, 146) sont prévus pour commander le processus de chauffe.

15. Dispositif selon la revendication 14, **caractérisé en ce que** le logement (160) est susceptible de s'emboîter sur l'appareil manuel (130), des prises de contact femelles (153) et des prises de contact mâles (172, 172') complémentaires étant prévues pour le branchement électrique de l'élément chauffant (167), et une échancrure (162) à travers laquelle la pointe de contact (101) enfichée dans l'élément chauffant (167) est accessible par l'extérieur restant libre entre le logement (160) et l'appareil manuel (130).

16. Dispositif selon l'une quelconque des revendications 14 et 15, **caractérisé en ce que** l'élément chauffant (167) comprend une bobine cylindrique en un filament chauffant (186), enroulée sur une douille (187) et **en ce que** la douille (187) est disposée avec le filament chauffant (186) au centre d'un diaphragme (171), de façon à pouvoir sortir en direction de l'axe de la fiche mâle (100) introduite.

17. Dispositif selon la revendication 16, **caractérisé en ce que** le diaphragme (171) est conçu sous la forme d'une carte de circuits imprimés et sert pour le branchement du filament chauffant (186) et **en ce que** les caractéristiques d'élasticité du diaphragme (171) sont créées par deux fraisages (189, 190) concentriques, s'engageant l'un dans l'autre en forme de spirales, dans la carte de circuits imprimés.

18. Dispositif selon l'une quelconque des revendications 14 à 17, **caractérisé en ce que** l'adaptateur (173) est relié de façon amovible au logement (160).

19. Dispositif selon l'une quelconque des revendications 14 à 18, **caractérisé en ce que** l'adaptateur (173) comprend deux coulisseaux (178, 178'), qui sont déplaçables dans des directions opposées, à la transversale de l'axe de la fiche mâle (100) introduite, **en ce que** la fiche mâle (100) introduite peut être maintenue par serrage entre les deux coulisseaux (178, 178') et **en ce que** les deux coulisseaux (178, 178') peuvent être bloqués dans la position de serrage au moyen d'un coulisseau de blocage (176) déplaçable à la transversale par rapport à ces derniers.

20. Dispositif selon l'une quelconque des revendications 14 à 19, **caractérisé en ce que** les moyens d'actionnement comprennent un boulon (143) logé de façon déplaçable dans un guidage (141), qui par l'intermédiaire d'un élément intermédiaire (151) guidé dans le guidage (141) agit sur la pointe de contact (101) de la fiche mâle (100) introduite dans le logement (160).

21. Dispositif selon la revendication 20, **caractérisé en ce que** l'élément intermédiaire est conçu sous la forme d'un collecteur de fibres (151) pour collecter les sections de fibres brisées après le collage et **en ce que** le collecteur de fibres (151) est relié de façon amovible avec le boulon (143), notamment par l'intermédiaire d'un aimant (144) intégré, et est susceptible d'être retiré pour être vidé hors du guidage (141).

22. Dispositif selon l'une quelconque des revendications 20 et 21, **caractérisé en ce que** l'appareil manuel (130) comprend un boîtier tubulaire (127), qui sur l'extrémité supérieure est fermé par un corps en forme de disque (158), **en ce que** dans la partie inférieure du boîtier (127) est logé un accupack (132), **en ce que** le guidage (141) pour le boulon (143) et l'élément intermédiaire ou le réservoir à fibres (151) est disposé entre l'accupack (132) et le corps (158), et **en ce qu'**on actionne le boulon (143) par l'intermédiaire d'un élément de commande (129) en forme de pot, qui est retourné de façon déplaçable contre la pression d'un ressort de pression (131) sur l'extrémité inférieure du boîtier (127) et qui est en interaction mécanique par-delà l'accupack (132) avec le boulon (143), par l'intermédiaire de moyens de liaison mécaniques (136, 137, 139).

23. Dispositif selon la revendication 22, **caractérisé en ce que** dans le boîtier (127), entre l'accupack (132) et le corps en forme de disque (158), autour du boulon (143), sont prévus des moyens (140, 146, 149) pour la commande électronique du processus de chauffe.

24. Dispositif selon l'une quelconque des revendications 14 à 23, **caractérisé en ce que**, sur l'appareil manuel (130) sont prévus des moyens (147, 148, 159, 161) pour le logement et la conservation fermable d'une cartouche de colle (150) remplie de colle.

25. Dispositif selon l'une quelconque des revendications 14 à 24, **caractérisé en ce que**, pour la conservation et la mise à disposition de l'appareil manuel (130) et des outils (208) qui lui sont associés, il est prévu une boîte à outils (215) portable.

26. Dispositif selon la revendication 25, **caractérisé en ce que** des réservoirs d'emballages (226), avec des pièces de consommation, comme par exemple des pièces détachées de connecteurs à fiches, peuvent se fixer sur la boîte à outils (215).

27. Connecteur à fiches destiné à être utilisé dans un procédé selon l'une quelconque des revendications 1 à 13, lequel connecteur à fiches comprend une fiche mâle (100) avec une pointe de contact (101) pour le logement et le collage de l'extrémité avant de la fibre (205) du guide d'ondes optiques (200), **caractérisé en ce que** dans la fiche mâle (100) sont prévus des moyens (104, 106, 110, 112, 113) de serrage du brin (203) du guide d'ondes optiques (200), lesquels moyens de serrage (104, 106, 110, 112, 113) sont susceptibles d'être actionnés par introduction axiale de la pointe de contact (101) dans la fiche mâle (100).

28. Connecteur à fiches selon la revendication 27, **caractérisé en ce que** les moyens de serrage comprennent un élément intérieur (104), s'étendant dans la direction axiale, avec un trou traversant pour faire passer le guide d'ondes optiques (200), élément dans une extrémité duquel est introduite la pointe de contact (101) et qui sur l'autre extrémité se ramifie en plusieurs bras de serrage (111), qui entourent sous forme annulaire les brins (203) d'un guide d'ondes optiques (200) traversant, **en ce que** l'élément intérieur (104) s'introduit avec les bras de serrage (111) dans une douille (106) disposée de façon concentrique et **en ce que** la douille (106) comporte un rétrécissement conique (110) dans lequel les bras de serrage (111) sont comprimés pour serrer, lorsqu'on introduit plus loin l'élément intérieur (104) dans la douille (106).

29. Connecteur à fiches selon la revendication 28, **caractérisé en ce que**, sur l'élément intérieur (104) et sur la douille (106), sont prévus des moyens d'enclenchement (112, 113) qui enclenchent l'un avec l'autre les deux éléments, lorsque, pour serrer un brin (203), on introduit l'élément intérieur (104) dans la douille (106).

30. Connecteur à fiches selon l'une quelconque des revendications 27 à 29, **caractérisé en ce qu'**un dispositif anticoque (115) est prévu, qui peut se monter sur l'extrémité arrière de la fiche mâle (100), **en ce que**, pour le montage du dispositif anticoque (115), la fiche mâle (100) comporte sur l'extrémité arrière un filetage (108) conique, et **en ce qu'**un écrou (117) avec un taraudage (118) conique correspondant est prévu, pour se visser sur le filetage (108) du dispositif anticoque (115) et pour maintenir le dispositif anticoque (115) sur la fiche mâle (100).

31. Connecteur à fiches selon la revendication 30, **caractérisé en ce que** des filetages (108) et des taraudages (118) sont prévus sous la forme de filets ronds et **en ce que** sur le filetage (108) sont prévus des moyens, notamment sous forme d'une matrice de découpage (107) orientée de façon tangentielle, qui empêchent une rotation arrière de l'écrou (117) sur le filetage (108).

32. Connecteur à fiches selon l'une quelconque des revendications 30 et 31, **caractérisé en ce que** l'écrou (117) est disposé de façon amovible sur un élément de douille (116) formé sur le dispositif anticoque (115) et **en ce que**, pour la liaison par complémentarité de forme avec limitation du couple de rotation entre l'écrou (117) et le dispositif anticoque (115), il est prévu sur la périphérie extérieure de l'écrou (117) et sur la périphérie intérieure de l'élément de douille (116) à chaque fois un moletage (126 ou 125), lesquels moletages (125, 126) sont en engagement mutuel.

33. Connecteur à fiches selon l'une quelconque des revendications 30 à 32, **caractérisé en ce que** sur la fiche mâle (100), dans la direction d'enfichage, derrière le filetage (108) est prévu un espace de logement annulaire (109), **en ce que** le dispositif anticoque (115) est déplaçable dans la direction axiale par rapport à l'écrou (117) de sorte que l'élément de douille (116) recouvre l'espace de logement (109) et **en ce que** sur l'extrémité avant de l'élément de douille (116) sont ménagées des échancrures d'entrée (119), qui lors de la rotation du dispositif anticoque (115) hors de l'écrou (117) saisissent des fibres de renfort (202) sortant du guide d'ondes optiques (200) et les engagent dans l'espace de logement (109).

34. Connecteur à fiches selon l'une quelconque des revendications 30 à 33, **caractérisé en ce que** sur la fiche mâle (100), dans la direction d'enfichage, à l'avant du filetage (108) est prévu un embout tubulaire (194), pour l'introduction du brin (203) et pour l'emboîtement de l'enveloppe (201) et **en ce que** sur l'extrémité ouverte de l'embout (194) est disposé un accessoire de montage, notamment sous la forme d'une goulotte de montage (231).

35. Connecteur à fiches selon l'une quelconque des revendications 30 à 34, **caractérisé en ce que** le dispositif anticoque (115) comporte une douille anticoque (124) se rétrécissant sous forme conique vers l'extérieur et **en ce que** sur la douille anticoque (124) est prévu un marquage, notamment sous la forme d'un anneau de marquage (207) différant dans son diamètre, jusqu'à l'atteinte duquel la douille anticoque (124) doit être raccourcie, lorsqu'il s'agit de fabriquer un guide d'ondes optiques (200) muni d'une enveloppe (201).

36. Connecteur à fiches selon l'une quelconque des revendications 30 à 32, **caractérisé en ce que** sur le dispositif anticoque (115), sont formées deux ailettes (122, 123) se faisant face sur le côté extérieur, pour augmenter la force rotatrice, qui après le vissage du dispositif anticoque (115) peuvent être retirées en étant brisées sur un point destiné à la rupture disposé directement sur le dispositif anticoque (115).
